(19) Europäisches Patentamt
European Patent Office
Office européen des brevets

(11) Veröffentlichungsnummer: **0 014 432**
**B1**

(12) # EUROPÄISCHE PATENTSCHRIFT

(45) Veröffentlichungstag der Patentschrift: **18.05.83**

(51) Int. Cl.[3]: **C 09 B 62/01**, D 06 P 3/66, D 06 P 3/10

(21) Anmeldenummer: **80100471.4**

(22) Anmeldetag: **30.01.80**

(54) **Wasserlösliche, faserreaktive Disazofarbstoffe, Verfahren zu deren Herstellung und ihre Verwendung zum Färben und Bedrucken von hydroxygruppen- und carbonamidgruppenhaltigen Fasermaterialien.**

(30) Priorität: **03.02.79 DE 2904124**

(43) Veröffentlichungstag der Anmeldung: **20.08.80 Patentblatt 80/17**

(45) Bekanntmachung des Hinweises auf die Patenterteilung: **18.05.83 Patentblatt 83/20**

(84) Benannte Vertragsstaaten: **CH DE FR GB IT**

(56) Entgegenhaltungen:
**DE-A-2 658 329**
**DE-A-2 658 472**
**FR-A-2 375 301**
**FR-A-2 417 529**

(73) Patentinhaber: **HOECHST AKTIENGESELLSCHAFT, Postfach 80 03 20, D-6230 Frankfurt/Main 80 (DE)**

(72) Erfinder: **Kühne, Rudolf, Dr., Oestricher Weg 27, D-6000 Frankfurt am Main 71 (DE)**
Erfinder: **Hoyer, Ernst, Dr., Eptingweg 3, D-6230 Frankfurt am Main 80 (DE)**
Erfinder: **Meininger, Fritz, Dr., Loreleistrasse 7, D-6230 Frankfurt am Main 80 (DE)**
Erfinder: **Fass, Rudolf, Memelstrasse 28, D-6233 Kelkheim (Taunus) (DE)**

**EP 0 014 432 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wasserlösliche, faserreaktive Disazofarbstoffe, Verfahren zu deren Herstellung und ihre Verwendung zum Färben und Bedrucken von hydroxygruppen- und carbonamidgruppenhaltigen Fasermaterialien

Aus den Deutschen Offenlegungsschriften DE-A-2658329 und 2658472 sind bereits Bis-(aminophenoxy)-methan- und Bis-(nitro-aminophenoxy)-methan-Verbindungen und andere Substitutionsderivate als Vorprodukte für Azoverbindungen bekannt, ebenso auch entsprechende Disazoverbindungen, die diese Bis-(aminophenoxy)-methan-Derivate als Diazokomponenten (Tetrazokomponenten) enthalten. Aus diesen Offenlegungsschriften geht jedoch lediglich hervor, dass solche Bis-(aminophenoxy)-methan-Verbindungen und deren Derivate für die Herstellung von Azopigmenten geeignet sind. Dies wird insbesondere aus den Angaben der Deutschen Offenlegungsschrift DE-A-2658472 und den letzten beiden Zeilen von Seite 3 bis Zeile 4 von Seite 4 und aus den Angaben der Deutschen Offenlegungsschrift DE-A-2658329 in den Zeilen 5 bis 18 von Seite 8 deutlich. Weiterhin sind analog hierzu aus der Französischen Offenlegungsschrift FR-A-2375301 wasserunlösliche Disazoverbindungen (Azopigmente) bekannt, die als Tetrazokomponente solche Bis-(nitro-aminophenoxy)-alkan-Verbindungen und -Substitutionsderivate enthalten und deren Kupplungskomponenten ein Rest einer enolisierbaren, aber keine wasserlöslich machenden Gruppen besitzenden Ketomethylenverbindung, wie eines Acetoacetylamids, ist.

Mit der vorliegenden Erfindung wurden nunmehr wasserlösliche, faserreaktive Disazofarbstoffe gefunden, die solche Diamine als Tetrazokomponenten enthalten und die in überraschender Weise sehr gute Farbstoffeigenschaften zeigen.

Die erfindungsgemässen Farbstoffe besitzen die allgemeine Formel (1)

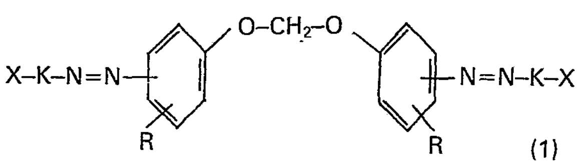

(1)

in welcher R jeweils die gleiche Bedeutung hat und für ein Wasserstoffatom oder eine Nitrogruppe steht, K den Rest einer sulfo- und/oder carboxygruppenhaltigen Kupplungskomponente bedeutet und X eine faserreaktive Gruppe darstellt.

Die neuen Farbstoffe der allgemeinen Formel (1) können in Form der freien Säure als auch in Form ihrer Salze vorliegen. Bevorzugt sind sie in Form der Salze, insbesondere der Alkali- und Erdalkalimetallsalze, wie der Natrium-, Kalium- und Calciumsalze. Sie finden bevorzugt in Form dieser Salze Verwendung zum Färben und Bedrucken von Fasermaterialien.

Die vorliegende Erfindung betrifft weiterhin ein Verfahren zur Herstellung der neuen Farbstoffe der allgemeinen Formel (1), bei welchem man eine aromatische Diamino-Verbindung der allgemeinen Formel (2)

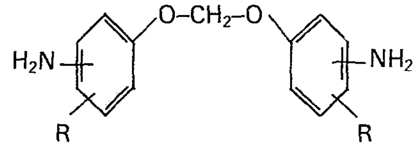

(2)

in welcher R die oben genannte Bedeutung hat, tetrazotiert und mit der äquivalenten Menge einer Kupplungskomponente der allgemeinen Formel (3)

$$H\text{–}K\text{–}X \qquad (3)$$

mit K und X der oben genannten Bedeutung kuppelt.

Die Tetrazotierung der Diamine der allgemeinen Formel (2) kann in üblicher Weise analog zu Tetrazotierungsreaktionen anderer bekannter Diamine ausgeführt werden; bei der Tetrazotierung liegen die eingesetzten Diamine in der Regel in Form der Salze einer anorganischen oder organischen Säure vor.

Die Kupplung der tetrazotierten Diamine mit den Kupplungskomponenten der allgemeinen Formel (3) wird ebenso analog lange bekannten Verfahrensweisen durchgeführt; bevorzugt erfolgt sie bei einem pH-Wert zwischen 3 und 7 und bei einer Temperatur zwischen −5°C und +30°C.

Diamine der allgemeinen Formel (2) sind beispielsweise:

Bis-(2-amino-phenoxy)-methan (bevorzugt als Dihydrochlorid),
Bis-(5-nitro-2-amino-phenoxy)-methan,
Bis-(3-amino-phenoxy)-methan,
Bis-(4-amino-phenoxy)-methan,
Bis-(3-nitro-4-amino-phenoxy)-methan,
Bis-(4-nitro-2-amino-phenoxy)-methan,
Bis-(2-nitro-4-amino-phenoxy)-methan.

Die Verbindungen der allgemeinen Formel (2) können beispielsweise nach dem in der Deutschen Offenlegungsschrift 2658329 und in Helvetica Chimica Acta 41, 1783−1792 (1958) beschriebenen Verfahren hergestellt werden.

Die Kupplungskomponenten der allgemeinen Formel (3) enthalten mindestens eine Sulfonsäure oder Carbonsäuregruppe. Bevorzugt enthalten sie 1 bis 3 Sulfonsäuregruppen oder eine Carbonsäuregruppe und 1 bis 3 Sulfonsäuregruppen. Als Kupplungskomponenten kommen bevorzugt Verbindungen mit einer phenolischen Hydroxygruppe oder einer enolischen Hydroxygruppe in Frage, insbesondere Kupplungskomponenten aus der Pyrazolon-, der Naphthol-, der Acetoacetylarylid-, wie der Acetoacetylanilid- oder Acetoacetylnaphthylamid-Reihe.

Faserreaktive Gruppen X, die in den erfindungsgemässen Farbstoffen enthalten sind, sind die zahlreich in der Literatur bekannten faserreaktiven Reste der carbocyclischen und heterocyclischen sowie aliphatischen Reihe. Bevorzugt sind die halogensubstituierten Triazinreste, insbesondere die faserreaktiven Reste der Vinylsulfonreihe zu nennen, wobei diese eben genannten Gruppen direkt

oder über ein Brückenglied, wie beispielsweise eine niedere Alkylengruppe oder eine gegebenenfalls substituierte Aminogruppe, an den aromatischen Rest des Farbstoffchromophors gebunden sein können.

Kupplungskomponenten der allgemeinen Formel (3) mit einer faserreaktiven Gruppe X sind insbesondere die nachfolgend genannten Verbindungen der allgemeinen Formel (4) bis (7):

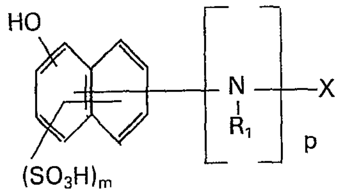

(4)

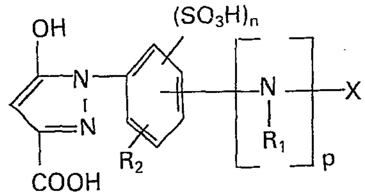

(5)

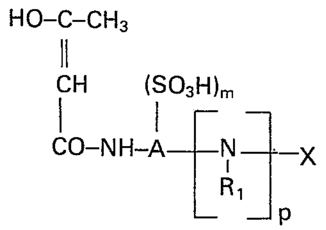

(6)

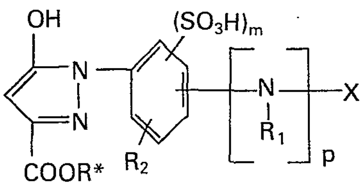

(7)

In diesen Formeln hat X die oben genannte Bedeutung, m steht für die Zahl 1 oder 2, n und p bedeuten jedes die Zahl Null oder 1, wobei m, n und p gleich oder verschieden voneinander sein können, $R_1$ steht für ein Wasserstoffatom oder eine niedere Alkylgruppe, wie insbesondere Methylgruppe, $R_2$ stellt ein Wasserstoffatom, ein Chlor- oder Bromatom, eine niedere Alkylgruppe, wie insbesondere Methylgruppe, oder eine niedere Alkoxygruppe, wie insbesondere Methoxygruppe dar, und A bedeutet den Benzol- oder Naphthalinkern, der im Falle des Naphthalinrestes bevorzugt, in β-Stellung an den Acetoacetylamid-Rest gebunden ist, und R* bedeutet eine niedere Alkylgruppe, wie eine Methyl- oder Äthylgruppe, bevorzugt eine Methylgruppe, wobei $R_1$, $R_2$ und R* gleich oder verschieden voneinander sein können.

Faserreaktive Gruppen des Formelrestes X sind vorzugsweise Gruppen der allgemeinen Formeln (8) bis (10):

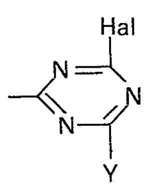

(8)

$-SO_2-CH=CH_2$ (9)

$-SO_2-CH_2-CH_2-Z$ (10)

In diesen Formeln bedeuten:

Hal ein Bromatom, vorzugsweise ein Fluor- oder Chloratom, oder die Sulfonsäuregruppe;

Y ein Chlor- oder Bromatom oder eine Thiogruppe der allgemeinen Formel -S-R' oder eine Äthergruppe der allgemeinen Formel -O-R'', in welchen

R' niederes Alkyl oder substituiertes niederes Alkyl, wie beispielsweise durch Substituenten aus der Gruppe Hydroxy, niederes Alkoxy, Sulfato, Sulfo, Carboxy und Phenyl substituiertes niederes Alkyl, oder Phenyl oder substituiertes Phenyl, wie beispielsweise durch Substituenten aus der Gruppe Chlor, Nitro, Sulfo und Carboxy substituiertes Phenyl, oder den Benzthiazolyl(2)-Rest bedeutet, und

R'' ein Wasserstoffatom oder niederes Alkyl oder substituiertes niederes Alkyl, wie beispielsweise durch Substituenten aus der Gruppe Hydroxy, niederes Alkoxy, Sulfato, Sulfo, Carboxy und Phenyl substituiertes niederes Alkyl, oder Phenyl oder substituiertes Phenyl, wie beispielsweise durch Substituenten aus der Gruppe Chlor, Nitro, Sulfo und Carboxy substituiertes Phenyl, ist, oder es bedeutet

Y eine Aminogruppe der allgemeinen Formel $-NR_3R_4$, in welcher

$R_3$ ein Wasserstoffatom, ein gegebenenfalls substituierter niederer aliphatischer Rest, ein gegebenenfalls substituierter araliphatischer Rest oder ein cycloaliphatischer Rest ist, wie beispielsweise ein niederer Alkylrest, der durch ein oder zwei Substituenten aus der Gruppe Hydroxy, Sulfato, niederes Alkoxy, Sulfo, Carboxy und Phenyl substituiert sein kann, oder ein Cyclohexylrest, und

$R_4$ für ein Wasserstoffatom, einen gegebenenfalls substituierten niederen aliphatischen Rest, wie beispielsweise einen niederen Alkylrest, der durch Hydroxy, niederes Alkoxy, Sulfato, Sulfo und Carboxy substituiert sein kann, oder für einen gegebenenfalls substituierten aromatischen Rest, wie beispielsweise für einen Phenyl- oder Naphthylrest, der durch ein oder zwei Substituenten aus der Gruppe Hydroxy, Carboxy, Sulfo, Chlor,

Brom, niederes Alkyl und niederes Alkoxy und gegebenenfalls durch einen Rest der Formel (9) oder (10) substituiert sein kann, oder für einen gegebenenfalls substituierten araliphatischen Rest, wie beispielsweise einen niederen Alkylrest, der durch Phenyl oder Naphthyl substituiert ist, oder für eine Hydroxy- oder eine niedere Alkoxygruppe oder für eine gegebenenfalls substituierte Aminogruppe, wie beispielsweise die Aminogruppe oder eine Phenylamino oder niedere Alkylaminogruppe, steht, oder in welcher

$R_3$ und $R_4$ zusammen mit dem Stickstoffatom einen heterocyclischen Ring mit einem Alkylenrest von 2 bis 8, vorzugsweise 5 bis 7 C-Atomen, oder einen einen, zwei oder drei niedere Alkylenreste und 1 oder 2 Heteroatome, wie beispielsweise ein Stickstoff- oder Sauerstoffatom, enthaltenden heterocyclischen Ring bilden, wie beispielsweise den Morpholin-, Piperidin- oder Piperazin-Ring;

Z eine unter der Einwirkung eines Alkalis abspaltbare Gruppe, vorzugsweise ein Chloratom oder die Sulfato-, Thiosulfato-, Phosphato-, Acetyloxy-, Dimethylamino- oder Diäthylamino-Gruppe.

Bevorzugt stellt Y ein Chlor- oder Bromatom oder eine Sulfogruppe oder einen Rest der Formel -S-R' oder -O-R'' dar, in welchen R' bevorzugt einen Phenylrest, der durch Chlor oder Nitro substituiert sein kann, oder einen niederen Alkylrest, der durch Hydroxy oder Carboxy substituiert sein kann, bedeutet und R'' bevorzugt ein Wasserstoffatom oder einen niederen Alkylrest oder einen Phenylrest ist, der durch Sulfo oder Carboxy substituiert sein kann. Der Formelrest Y bedeutet weiterhin bevorzugt eine Aminogruppe der Formel $-NR_3R_4$, in welcher $R_3$ bevorzugt ein Wasserstoffatom oder eine niedere Alkylgruppe bedeutet, die durch eine Carboxy- oder Sulfogruppe substituiert sein kann, und in welcher $R_4$ bevorzugt ein Wasserstoffatom oder eine niedere Alkylgruppe bedeutet, die durch eine Hydroxy-, Sulfato-, Carboxy-, Sulfo-, niedere Alkoxy-Gruppe, einen Phenylrest oder einen Cyclohexylrest substituiert sein kann und $R_4$ weiterhin bevorzugt einen Phenylrest bedeutet, der durch Substituenten aus der Gruppe Carboxy, Sulfo, Methyl, Äthyl, Methoxy, Äthoxy, Chlor und Hydroxy substituiert sein kann und gegebenenfalls weiterhin durch einen faserreaktiven Rest der Formel (9) oder (10) substituiert sein kann, und $R_4$ weiterhin bevorzugt einen Naphthylrest darstellt, der durch 1 oder 2 Sulfogruppen substituiert sein kann und ebenso durch einen faserreaktiven Rest der Formel (9) oder (10) substituiert sein kann.

Von den Resten der Kupplungskomponenten mit einer faserreaktiven Gruppe X der allgemeinen Formel (3), die in den erfindungsgemässen Farbstoffen der allgemeinen Formel (1) enthalten sind, sind beispielsweise die folgenden Reste entsprechend den allgemeinen Formeln -K-X bzw. X-K-:

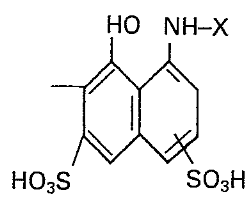 , 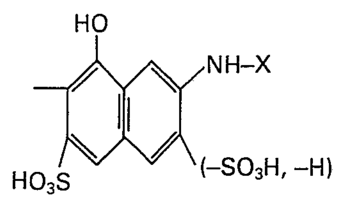 ,

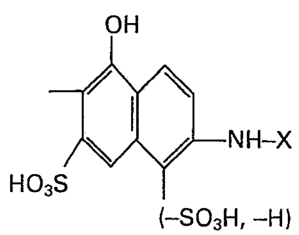 , 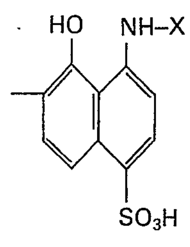 , 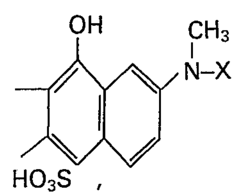 ,

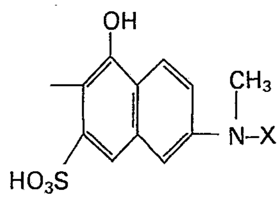 , 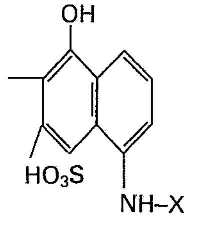 , 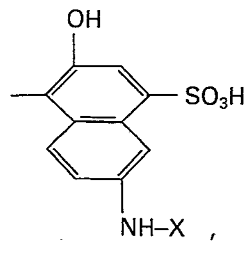 , 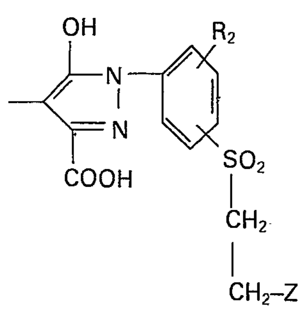 ,

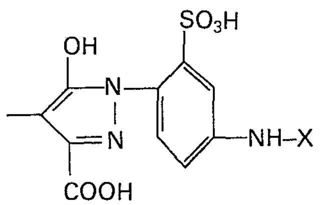
,

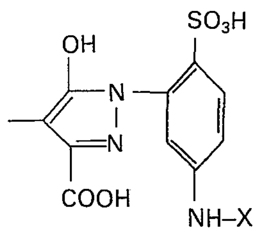
,

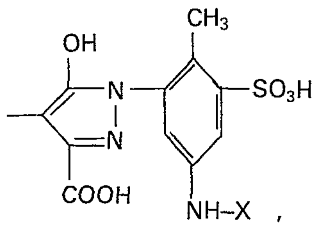
,

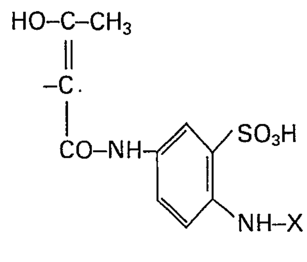
,

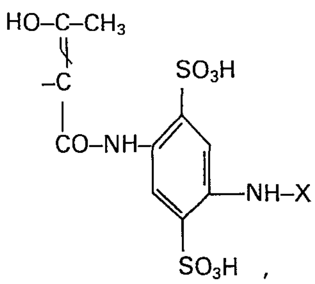
,

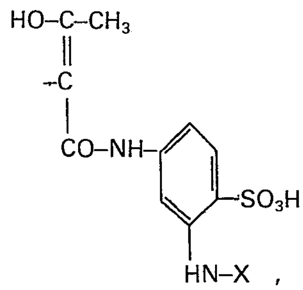
,

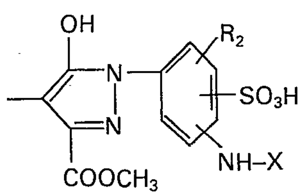
,

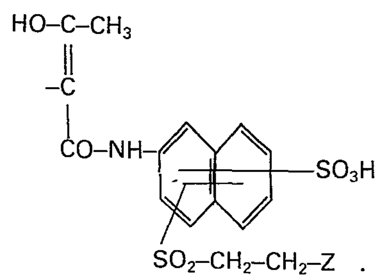
.

In diesen Formeln haben X, Z und $R_2$ die oben genannten Bedeutungen.

Neben dem Chlor- und Bromatom und der Sulfogruppe sind für den Substituenten Y im Triazinrest der allgemeinen Formel (8), insbesondere die folgenden Gruppen bevorzugt zu nennen:

$-O-CH_3$, $-O-C_2H_5$, $-O-CH_2-CH_2-CH_3$, $-OH$, 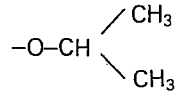 , 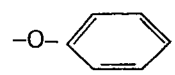

$-S-CH_2-CH_2-OH$, 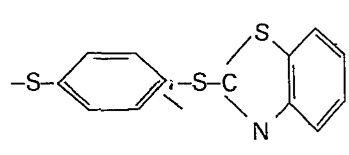 , $-S-CH_2-COOH$,

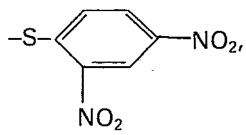, 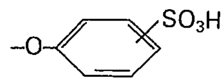, $-NH_2$, $-NH-CH_3$, $-NHC_2H_5$,

$-NH-C_3H_7$, $-NH-CH(CH_3)_2$, $-NH-CH_2-CH_2-OH$, $-NH-(CH_2)_3-OH$,

$-NH-CH_2-CH_2-OSO_3H$, $-NH-CH_2-CH_2-O-CH_3$, 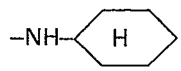

$-NH-CH_2-CH_2-SO_3H$, $-NH-CH_2-COOH$, $-NH-CH_2-CH_2-COOH$,

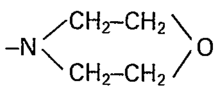, 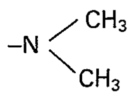, 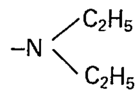, 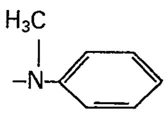,

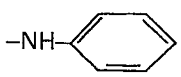, 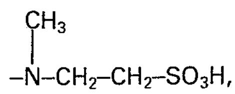, 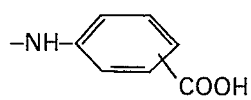, 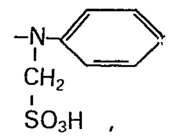,

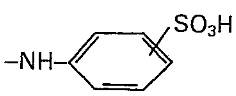, 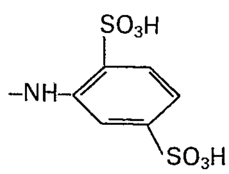, 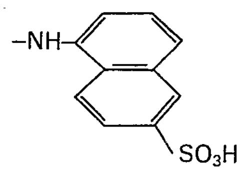,

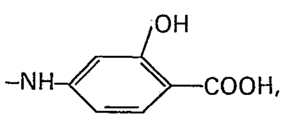, $-NH-OH$, $-NH-NH_2$, 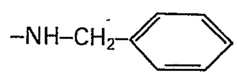,

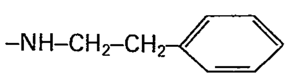; 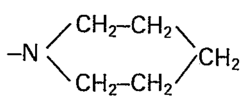,

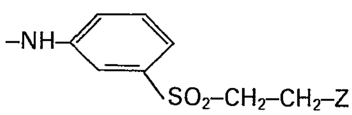, 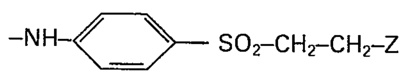,

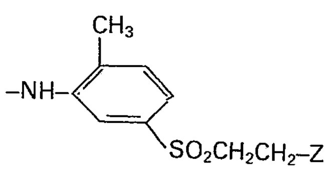, 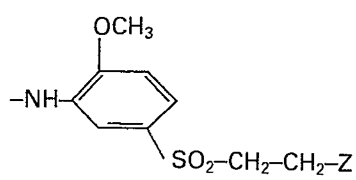,

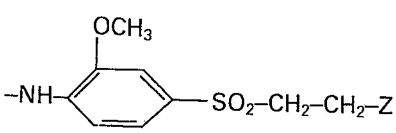, 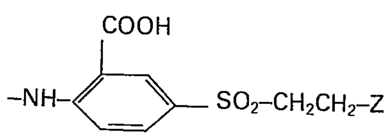,

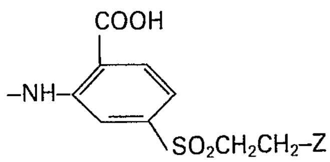 , 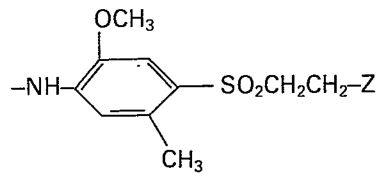 ,

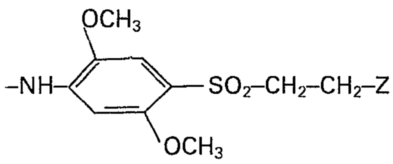 , 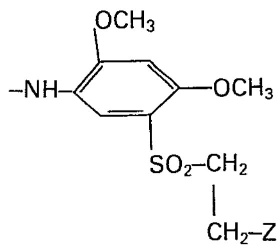 , 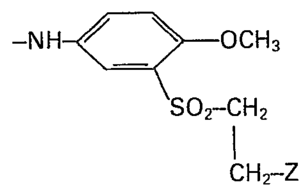 ,

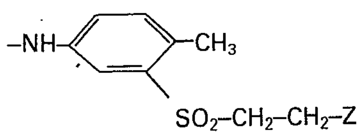 , 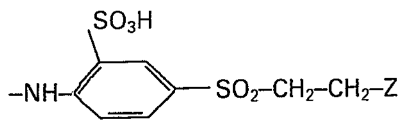 ,

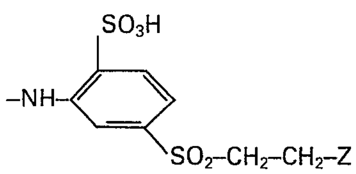 , 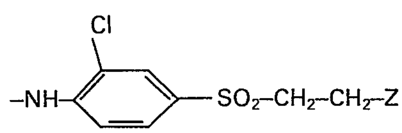 ,

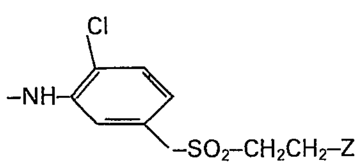 , 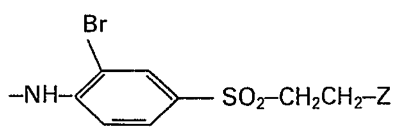 ,

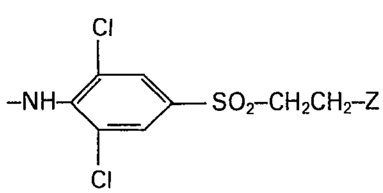 , 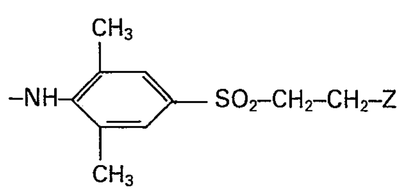 ,

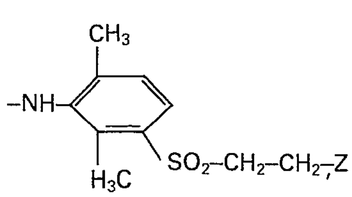 , 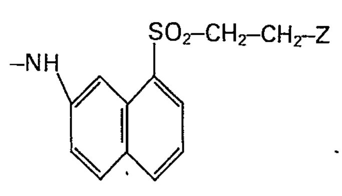 ,

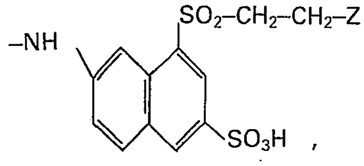 ,

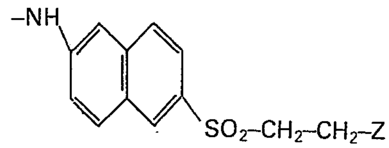 ,

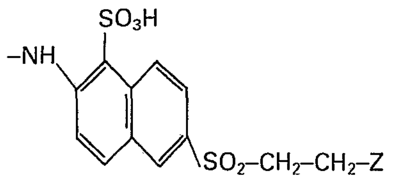 ,

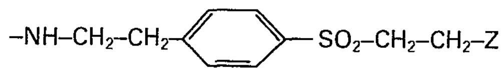 ,

worin Z die oben genannte Bedeutung hat.

In den oben genannten Formelresten der Kupplungskomponenten, die in den erfindungsgemässen Farbstoffen enthalten sind und in welchen die faserreaktive Gruppe $-SO_2-CH_2-CH_2-Z$ gebunden enthalten, und in den oben genannten Formelresten, die für den Substituenten Y stehen und den faserreaktiven Rest der Formel $-SO_2-CH_2-CH_2-Z$ gebunden enthalten, können anstelle dieses faserreaktiven Restes der allgemeinen Formel (10) die Vinylsulfonylgruppe als faserreaktiven Rest gebunden enthalten.

Die Kupplungskomponenten der allgemeinen Formel (3) können beispielsweise nach den in den Deutschen Patentschriften 485185, 925121, 1644157 und 1265698 angegebenen Verfahrensweisen hergestellt werden.

Ebenfalls Gegenstand der vorliegenden Erfindung ist das Färben und Bedrucken von hydroxygruppenhaltigen und carbonamidgruppenhaltigen Fasermaterialien mit den erfindungsgemässen Farbstoffen der allgemeinen Formel (1) sowie solche Fasermaterialien, die mit einem Farbstoff der allgemeinen Formel (1) gefärbt oder bedruckt wurden. Unter hydroxygruppenhaltigen Fasern werden vorzugsweise natürliche und regenerierte Cellulosefasermaterialien verstanden, insbesondere Baumwolle und regenerierte Cellulose, aber auch andere Pflanzenfasern, wie Leinen, Hanf, Jute. Carbonamidgruppenhaltige Fasermaterialien sind vor allem native, regenerierte oder synthetische Polyamidfasermaterialien, ebenso synthetische Polyurethanfasermaterialien. Natürliche Polyamidfasermaterialien sind beispielsweise Wolle und andere Tierhaare sowie Seide; von den synthetischen Polyamidfasermaterialien sind bevorzugt solche aus Polyamid-6,6, Polyamid-6, Polyamid-11 und Polyamid-4 zu nennen. Die erfindungsgemässen Farbstoffe lassen sich auf den genannten Substraten nach den für Reaktivfarbstoffe bekannten Anwendungstechniken applizieren. So erhält man mit ihnen auch Cellulosefasern nach dem Ausziehverfahren aus langer Flotte unter Verwendung der verschiedensten Alkalizusätze sehr gute Farbausbeuten.

Nach den Klotzverfahren werden auf Cellulosefasern ebenfalls ausgezeichnete Farbausbeuten erhalten, wobei durch Verweilen bei Raumtemperatur, durch Dämpfen oder mit Trockenhitze fixiert werden kann.

Nach den üblichen Druckverfahren für Cellulosefasern, einphasig in Anwesenheit von Natriumbicarbonat oder anderer säurebindender Mittel in der Druckpaste und anschliessendem Dämpfen bei 101 bis 103°C, oder zweiphasig mit neutraler oder schwach saurer Druckpaste gedruckt und dann entweder durch ein heisses, elektrolythaltiges alkalisches Bad geführt oder aber mit einer alkalischen elektrolythaltigen Klotzflotte überklotzt und dann durch Verweilen, Dämpfen oder Trockenhitze entwickelt, erhält man ebenfalls farbstarke Drucke mit gutem Stand der Konturen und einem klaren Weissfond. Der Ausfall der Drucke ist von wechselnden Fixierbedingungen nur wenig abhängig. Sowohl in der Färberei als auch in der Druckerei sind die mit den erfindungsgemässen Farbstoffen enthaltenen Fixiergrade aussergewöhnlich hoch.

Die Echtheit der auf Cellulosefasern mit Hilfe der erfindungsgemässen Farbstoffe erhaltenen Färbungen und Drucke sind beachtlich. Dies gilt sowohl für die wichtigsten Fabrikations- als auch für die wichtigsten Gebrauchsechtheiten. Besonders sind hier die Lichtechtheit, Nassechtheiten, wie Waschechtheiten, Walkechtheiten, Wasserechtheit, Seewasserechtheit, Überfärbeechtheit und Schweissechtheiten, sowie die Plissierechtheit, Bügelechtheit und Reibechtheit zu erwähnen.

Die Färbungen auf Polyamidfasern werden üblicherweise aus saurem Milieu ausgeführt. So kann man beispielsweise dem Färbebad Essigsäure oder Essigsäure und Ammoniumacetat zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzol- und/oder einer Aminonaphthalinsäure und/oder auf Basis eines Umsetzungsproduktes von beispielsweise Stearylamin mit Äthylenoxid. Die Färbungen können sowohl bei Siedetemperatur als auch bei Temperaturen bis zu 120°C, wie bei 110 bis 120°C, ausgeführt werden.

Von den erfindungsgemässen Farbstoffen der allgemeinen Formel (1) sind weiterhin diejenigen Farbstoffe, die als faserreaktiven Rest einen halogenhaltigen Triazinrest enthalten, diejenigen erfindungsgemässen Farbstoffe als besonders bevorzugt zu nennen, bei denen in dem faserreaktiven Rest der allgemeinen Formel (8) die Substituenten Hal und Y beide für ein Chloratom oder der Substituent Hal für ein Chlor- oder Fluoratom und der Substituent Y jeweils die obengenannte Bedeutung, insbesondere bevorzugte Bedeutung hat, oder in welchen der faserreaktive Rest der allgemeinen Formel (8) für die Gruppe der allgemeinen Formel (11)

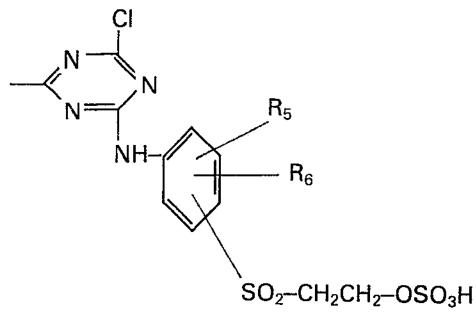

(11)

steht, in welcher $R_5$ ein Wasserstoffatom oder ein Chlor- oder Bromatom oder eine Methyl-, Methoxy-, Carboxy- oder eine Sulfogruppe und $R_6$ ein Wasserstoffatom oder ein Chloratom oder eine Methyl- oder Methoxygruppe bedeuten.

Die im Vorstehenden genannten Bezeichnungen «niedere» bedeuten, dass diese Gruppe oder Verbindungen einen Alkylrest von 1 bis 4 C-Atomen enthalten bzw. daraus bestehen.

In den folgenden Beispielen sind die Farbstoffformeln der Einfachheit halber in Form ihrer freien Säuren geschrieben. Die Farbstoffe liegen in der Regel als deren Alkali- und gegebenenfalls Erdalkalisalze vor, die Ausbeuten sind jedoch auf die freie Säure der Farbstoffe berechnet. – Die Teile stellen Gewichtsteile dar, sofern nicht anders vermerkt. Sie verhalten sich zu den Raumteilen (Volumenteilen) wie das Kilogramm zum Liter. Die Prozentangaben beziehen sich auf Gewichtsprozente, sofern nicht anders vermerkt.

Beispiel 1

Eine Lösung aus 19,5 Teilen Cyanurchlorid in 100 Volumenteilen Aceton wird unter guter Rührung in ein Gemisch aus 200 Teilen Wasser und 200 Teilen Eis einfliessen lassen. Bei einer Temperatur von 0 bis 5°C lässt man eine wässrige Lösung mit einem pH-Wert von 5 aus 31,5 Teilen 1-Amino-8-naphthol-3,6-disulfonsäure und 3,7 Teilen Natriumcarbonat in 200 Teilen Wasser in die Cyanurchlorid-Suspension einlaufen, wobei der pH-Wert mittels etwa 10 Teilen Natriumbicarbonat bei 2,5 bis 3,5 gehalten wird. Das Reaktionsgemisch wird bei 0 bis 5°C weiterhin eine Stunde gerührt und sodann langsam in eine Tetrazoniumsalzlösung gegeben, die wie folgt hergestellt wurde:

15,16 Teile Bis-(2-amino-phenoxy)-methan-dihydrochlorid, in 200 Teilen Wasser und 25 Volumenteilen einer 31%igen Salzsäure gelöst, werden bei 0 bis 5°C durch langsame Zugabe von 200 Volumenteilen 5-n Natriumnitritlösung tetrazotiert. Anschliessend wird noch eine Stunde weiterhin bei 0 bis 5°C gerührt, danach überschüssige salpetrige Säure mit wenig Amidosulfonsäure zerstört. Die Tetrazoniumsalzlösung wird sodann mit Natriumbicarbonat auf einen pH-Wert von 5,5 eingestellt.

Nach dem Zusammengeben der Tetrazoniumsalzlösung und der Kupplungslösung rührt man zur Beendigung der Kupplung noch 14 h bei einer Temperatur von etwa 20–25°C und hält hierbei den pH-Wert durch portionsweise Zugabe von insgesamt etwa 17 Teilen Natriumbicarbonat zwischen 5,5 und 6,5. Der erhaltene Farbstoff wird durch Sättigen der Lösung mit Natriumchlorid ausgefällt, abgesaugt und bei 60°C unter reduziertem Druck, getrocknet. Nach dem Mahlen erhält man 110 Teile eines rotbraunen Pulvers, das 51,2 Teile des Farbstoffes der Formel (geschrieben in Form der freien Säure) enthält:

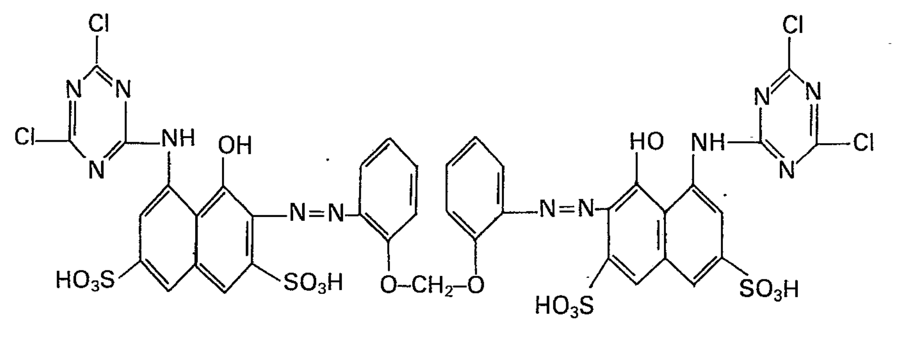

Dieser Farbstoff färbt nach den für Reaktivfarbstoffe üblichen Verfahrensweisen des Färbens oder Bedruckens und Fixierens Cellulosefasermaterialien in blaustichig roten Nuancen mit sehr guten Nassechtheiten.

Beispiel 2

Man setzt 19,5 Teile Cyanurchlorid mit 31,5 Teilen 1-Amino-8-naphthol-3,6-disulfonsäure, wie in Beispiel 1 beschrieben um und gibt zu der so erhaltenen Lösung eine neutrale Lösung von 25,6 Teilen Anilin-2,5-disulfonsäure und 9,0 Teilen Natriumcarbonat in 150 Teilen Wasser. Das Gemisch wird bei einer Temperatur von etwa 20–25°C und bei einem pH-Wert von 5,5 bis 6,5 mehrere Stunden lang gerührt.

Sodann lässt man die Lösung dieser Kupplungskomponente in die in Beispiel 1 beschriebene Tetrazoniumsalzlösung einfliessen und rührt danach bei Einhaltung eines pH-Wertes von 5,5 bis 6,5 12 h lang nach (der pH-Wert wird durch portionenweise Zugabe von insgesamt 11 Teilen Natriumbicarbonat gehalten). Nach beendeter Kupplung werden 5,0 Teile Kieselgur zugesetzt,

die Lösung auf 60°C erwärmt und abfiltriert. Die erhaltene Farbstofflösung wird unter reduziertem Druck bei 55–60°C zur Trockne eingedampft. Es werden 136 Teile eines braunen Farbstoffpulvers erhalten, das 85 Teile des Farbstoffes der Formel (geschrieben in Form der freien Säure)

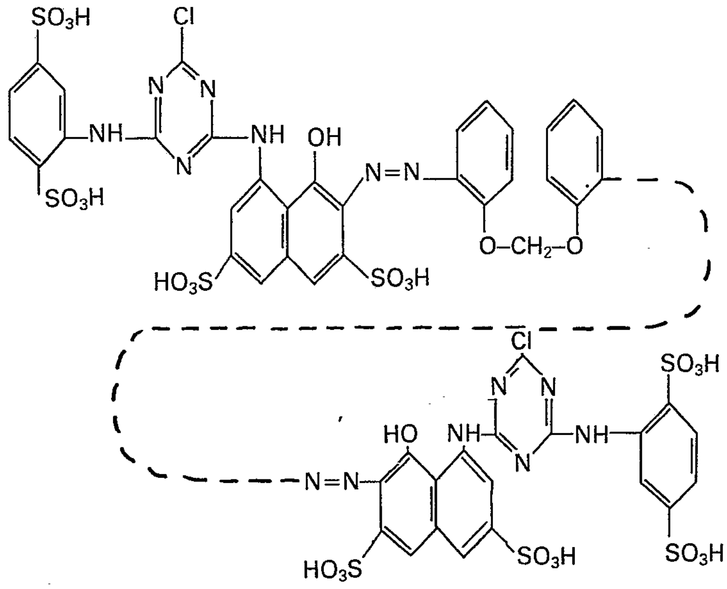

enthält. Dieser Farbstoff färbt nach für Reaktivfarbstoffe üblichen Applikations- und Fixierverfahren Cellulosefasermaterialien in blaustichig roter Nuance von sehr guten Echtheiten.

Beispiel 3

Zu der in Beispiel 1 beschriebenen Lösung des Umsetzungsproduktes aus Cyanurchlorid mit 1-Amino-8-naphthol-3,6-disulfonsäure wird eine neutrale Lösung von 28,3 Teilen Anilin-4-β-sulfatoäthylsulfon und 10,4 Teilen Natriumbicarbonat in 200 Teilen Wasser zulaufen lassen; die Reaktion wird unter Rühren innerhalb von mehreren Stunden bei einer Temperatur von 18–20°C zu Ende geführt, wobei der pH-Wert durch portionenweise Zugabe von etwa 8,5 Teilen Natriumbicarbonat auf 5,5 bis 6,5 gehalten wird.

Anschliessend wird diese Lösung der Kupplungskomponente in die in Beispiel 1 beschriebene Tetrazoniumsalzlösung einfliessen lassen und die Kupplung unter Rühren während mehrerer Stunden bei einem pH-Wert von 5,5 bis 6,5 und bei einer Temperatur von 18–20°C durchgeführt, wobei durch portionenweise Zugabe von insgesamt 10 Teilen Natriumbicarbonat der angegebene pH-Wert gehalten wird. Diese Farbstofflösung wird sodann mit 5 Teilen Kieselgur geklärt, das Filtrat bei einer Temperatur von 55–60°C unter reduziertem Druck zur Trockne eingedampft. Nach dem Mahlen erhält man 101 Teile eines braunen Farbstoffpulvers, das 75,3 Teile des Farbstoffes der Formel (geschrieben in Form der freien Säure)

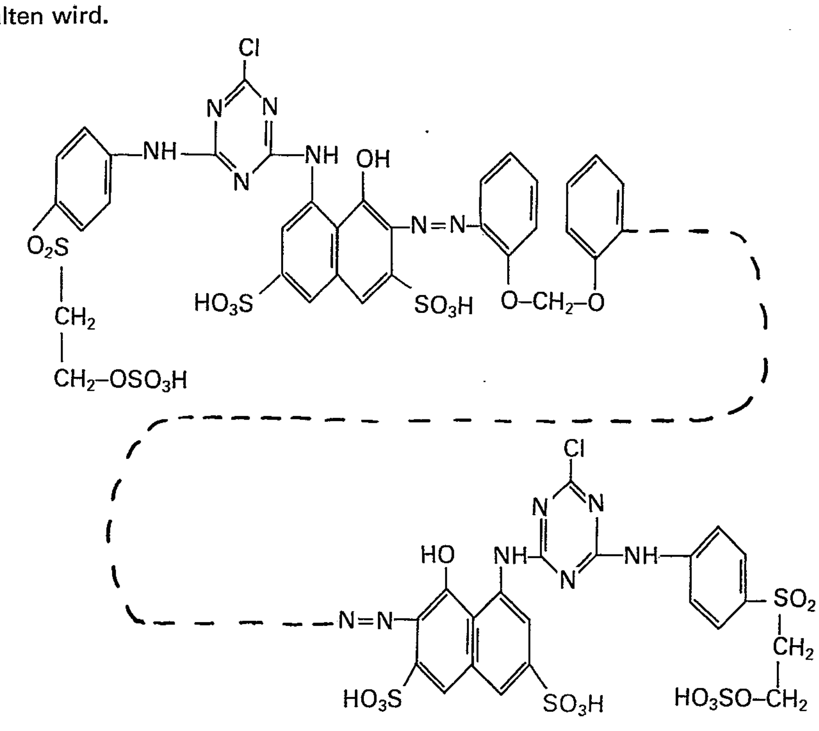

enthält. Dieser Farbstoff färbt nach den für faserreaktive Farbstoffe üblichen Anwendungs- und Fixierverfahren Polyamidfasermaterialien, insbesondere aber Cellulosefasermaterialien mit sehr guten Echtheiten in blaustichig roten Nuancen.

Beispiel 4

Man lässt die in Beispiel 1 beschriebene Tetrazoniumsalzlösung bei einer Temperatur von 0–5°C und einem pH-Wert von 5,5 bis 6,0 in eine Kupplungslösung einlaufen, die wie folgt hergestellt wird:

33,2 Teile 1-(4'-β-Hydroxyäthylsulfonyl-phenyl)-pyrazolon(5)-3-carbonsäure werden bei etwa 20°C innerhalb von 2 h in 33 Volumenteile einer 100%igen Schwefelsäure eingetragen, das Ganze 2 h lang bei 20–22°C gerührt. Die erhaltene Lösung wird auf 200 Teile Eis gegeben und vorsichtig bei einer Temperatur von 0–5°C mit etwa 110 Teilen Natriumbicarbonat auf einen pH-Wert von 5,5 bis 6,0 gestellt. Das auskristallisierte Natriumsulfat wird abgesaugt, dreimal mit kaltem Wasser nachgewaschen, Filtrat und Waschwasser werden zusammengegeben und als oben erwähnte Lösung der Kupplungskomponente eingesetzt.

Bei der Kupplungsreaktion wird nicht gekühlt, so dass sich die Temperatur des Kupplungsgemisches auf eine Temperatur von etwa 20–25°C erhöht; der pH-Wert wird durch Zugabe von wenig Natriumbicarbonat auf 5,5 bis 6,0 gehalten. Nach etwa 12stündiger Kupplungsreaktion wird der Farbstoff mit Natriumchlorid ausgefällt, abgesaugt und unter reduziertem Druck getrocknet. Nach dem Mahlen erhält man 97 Teile eines gelbbraunen Pulvers, das 48 Teile eines gelbbraunen Pulvers, das 48 Teile der Verbindung der Formel (in Form der freien Säure geschrieben)

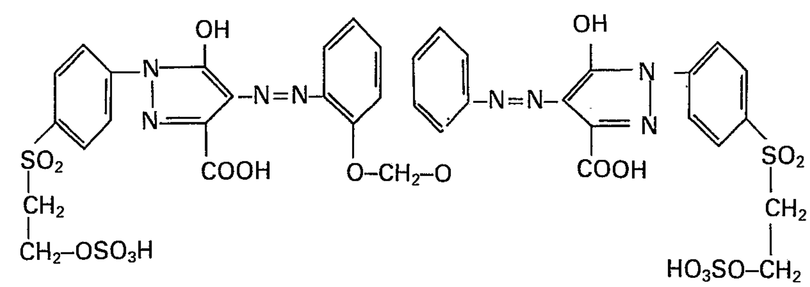

enthält. Dieser Farbstoff färbt nach den für faserreaktive Farbstoffe üblichen Applikations- und Fixierverfahren Cellulosefasermaterialien in rotstichig gelben Nuancen mit sehr guten Allgemeinechtheiten.

Beispiel 5

Eine Lösung aus 19,5 Teilen Cyanurchlorid in 100 Volumenteilen Aceton werden unter guter Rührung in ein Gemisch aus 200 Teilen Wasser und 200 Teilen Eis einfliessen lassen. Unter Einhaltung eines pH-Wertes von 2,5 bis 3,5 durch portionenweise Zugabe von insgesamt 10 Teilen Natriumbicarbonat wird unter gutem Rühren eine Lösung von 25,6 Teilen Anilin-2,5-disulfonsäure und 9,0 Teilen Natriumcarbonat in 150 Teilen Wasser zugegeben. Nach etwa 100 min ist eine praktisch klare Lösung entstanden, zu der man eine Lösung von 24,2 Teilen 2-Amino-5-naphthol-7-sulfonsäure und 7 Volumenteilen einer 33%igen Natronlauge in 250 Teilen Wasser unter Einhaltung eines pH-Wertes von 5,5 bis 6,0 zugibt; man rührt einige Stunden bei einer Temperatur von 15–18°C nach und hält hierbei den angegebenen pH-Wert mittels Natriumcarbonat. Die so erhaltene Lösung der Kupplungskomponente wird anschliessend langsam in eine Tetrazoniumsalzlösung gegeben, die wie folgt hergestellt wird:

10,2 Teile Bis-(4-amino-phenoxy)-methan werden in 200 Teilen Wasser und 30 Volumenteilen 31%iger Salzsäure suspendiert; 50 Teile Eis werden zugegeben und diese Suspension mit 20 Volumenteilen 5-n Natriumnitritlösung bei einer Temperatur von 0–5°C tetrazotiert. Die so erhaltene Tetrazoniumsalzlösung wird mit wenig Amidosulfonsäure von überschüssiger salpetriger Säure zerstört. Sie wird dann mit etwa 9 Teilen Natriumbicarbonat auf einen pH von 5,5 bis 6,0 gestellt.

Die Kupplung erfolgt bei einem pH-Wert von 5,5 bis 6,0 während etwa 16 h, innerhalb derer insgesamt 11,2 Teile Natriumbicarbonat zur Einhaltung des pH-Wertes portionenweise zugegeben werden. Anschliessend wird die Farbstofflösung auf 60–65°C erwärmt, mit 5 Teilen Kieselgur versetzt, verrührt und geklärt. Aus dem Filtrat wird der Farbstoff mittels Natriumchlorid ausgefällt und die Suspension nach Erkalten filtriert, der Rückstand bei 60°C unter reduziertem Druck getrocknet. Nach dem Mahlen erhält man 171 Teile eines braunen Farbstoffpulvers, das 71 Teile des Farbstoffes der Formel (geschrieben in Form der freien Säure)

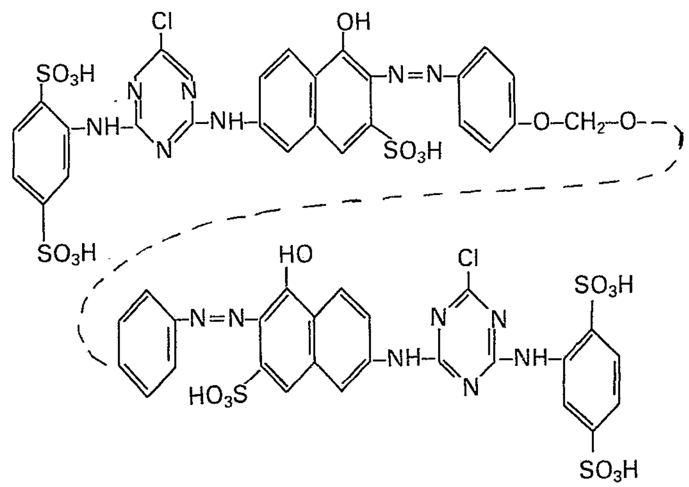

enthält. Dieser Farbstoff färbt nach üblichen Applikations- und Fixierverfahren für Reaktivfarbstoffe Cellulosefasermaterialien in gelbstichig roten Nuancen von sehr guten Echtheiten.

Beispiel 6

Gemäss Beispiel 5 wird in einem halben Reaktionsansatz Cyanurchlorid mit Anilin-2,5-disulfonsäure umgesetzt. Zu der so erhaltenen klaren Lösung gibt man eine Lösung von 15,6 Teilen 1-(4'-Amino-2'-sulfo-phenyl)-pyrazolon(5)-3-carbonsäure und 7,0 Teile Natriumcarbonat in 100 Teilen Wasser unter Einhaltung eines pH-Wertes von 5,5 bis 6,5. Das Reaktionsgemisch rührt man dann unter Erhöhen der Temperatur auf 25–28° C weitere 5 h unter Einhaltung des angegebenen pH-Bereiches durch portionenweise Zugabe von Natriumbicarbonat. Die so erhaltene Lösung der Kupplungskomponente lässt man sodann langsam in eine Tetrazoniumsalzlösung einlaufen, die wie folgt hergestellt wird:

8,0 Teile Bis-(5-nitro-2-amino-phenoxy)-methan werden in 200 Volumenteile konzentrierte Salzsäure eingerührt und durch Erwärmen auf 70°C gelöst. Diese Lösung giesst man auf 200 Teile Eis und tetrazotiert sodann das Diamin bei einer Temperatur von 0–5°C mit 10 Volumenteilen 5-n Natriumnitritlösung. Man rührt etwa 100 min lang bei einer Temperatur von 2–6°C nach und zerstört anschliessend überschüssige salpetrige Säure mit Amidosulfonsäure. Sodann wird ein pH-Wert von 5,5 bis 6,0 durch portionsweises Eintragen von 156 Teilen Natriumbicarbonat eingestellt.

Die Kupplung erfolgt bei einem pH-Wert von 5,5 bis 6,5 und bei einer Temperatur von 14–18°C innerhalb von 16 h unter Rühren; die erhaltene Farbstofflösung wird sodann auf 60°C erwärmt mit 5 Teilen Kieselgur geklärt. Aus dem Filtrat wird der Farbstoff mit 85 Teilen Natriumchlorid ausgefällt, die Suspension 3 h bei 8–10°C nachgerührt, abgesaugt, der Rückstand mit 5%iger Natriumchloridlösung gewaschen und bei 65°C unter reduziertem Druck getrocknet. Nach dem Mahlen erhält man 61 Teile eines hellbraunen Farbstoffpulvers, das etwa 38 Teile des Farbstoffes der Formel (geschrieben in Form der freien Säure)

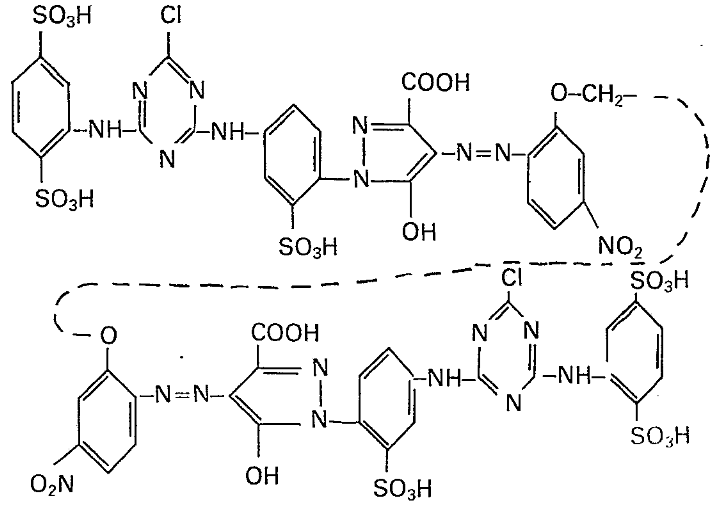

enthält. Dieser Farbstoff färbt unter Anwendung von für Reaktivfarbstoffe üblichen Applikations- und Fixierverfahren Cellulosefasermaterialien in gelbbraunen Tönen mit sehr guten Echtheiten.

Beispiele 7 bis 119:

Verfährt man in erfindungsgemässer Weise zur Herstellung der erfindungsgemässen Farbstoffe der allgemeinen Formel (1), so beispielsweise gemäss den Verfahrensweisen der Beispiele 1 bis 6, erhält man unter Tetrazotierung und Kupplung der in den nachfolgenden Tabellenbeispiele genannten Diamine als Tetrazokomponenten mit den dort entsprechend genannten Verbindungen als Kupplungskomponente die entsprechenden erfindungsgemässen Farbstoffe der allgemeinen Formel (1), die ebenfalls hydroxygruppenhaltige und carbonamidgruppenhaltige Fasermaterialien, insbesondere Cellulosefasermaterialien, wie Baumwolle, in den in den Beispielen genannten Farbtönen mit guten Echtheiten färben.

| Beispiel | Tetrazokomponente | Kupplungskomponente | Farbton |
|---|---|---|---|
| 7 | Bis-(5-nitro-2-amino-phenoxy)-methan | primäres Kondensationsprodukt aus 1 Mol 1-Amino-8-naphthol-3,6-disulfonsäure mit 1 Mol Cyanurchlorid | rotviolett |
| 8 | Bis-(3-amino-phenoxy)-methan | primäres Kondensationsprodukt aus 1 Mol 1-Amino-8-naphthol-3,6-disulfonsäure mit 1 Mol Cyanurchlorid | blaustichig rot |
| 9 | Bis-(4-amino-phenoxy)-methan | primäres Kondensationsprodukt aus 1 Mol 1-Amino-8-naphthol-3,6-disulfonsäure mit 1 Mol Cyanurchlorid | rubin |
| 10 | Bis-(3-nitro-4-amino-phenoxy)-methan | primäres Kondensationsprodukt aus 1 Mol 1-Amino-8-naphthol-3,6-disulfonsäure mit 1 Mol Cyanurchlorid | rotviolett |
| 11 | Bis-(2-amino-phenoxy)-methan-dihydrochlorid | sek. Kondensationsprodukt aus 1 Mol 1-Amino-8-naphthol-3,6-disulfonsäure und 1 Mol Anilin-3-sulfonsäure mit 1 Mol Cyanurfluorid | blaustichig rot |
| 12 | Bis-(3-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurfluorid | blaustichig rot |
| 13 | Bis-(4-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurfluorid | rubin |
| 14 | Bis-(5-nitro-2-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurfluorid | rotviolett |
| 15 | Bis-(3-nitro-4-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurfluorid | rotviolett |
| 16 | Bis-(2-amino-phenoxy)-methan-dihydrochlorid | sek. Kondensationsprodukt aus 1 Mol 1-Amino-8-naphthol-3,6-disulfonsäure und 1 Mol Anilin-3-sulfonsäure mit 1 Mol Cyanurchlorid | blaustichig rot |
| 17 | Bis-(3-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurchlorid | blaustichig rot |
| 18 | Bis-(4-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurchlorid | rubin |
| 19 | Bis-(3-nitro-4-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurchlorid | rotviolett |
| 20 | Bis-(5-nitro-2-amino-phenoxy)-methan | sek. Kondensationsprodukt aus 1 Mol 1-Amino-8-naphthol-3,6-disulfonsäure und 1 Mol Anilin-3-sulfonsäure mit 1 Mol Cyanurchlorid | rotviolett |
| 21 | Bis-(2-amino-phenoxy)-methan-dihydrochlorid | sek. Kondensationsprodukt aus 1 Mol 1-Amino-8-naphthol-3,6-disulfonsäure und 1 Mol Anilin mit 1 Mol Cyanurchlorid | blaustichig rot |
| 22 | Bis-(3-amino-phenoxy)-methan | sek. Kondensationsprodukt aus 1 Mol 1-Amino-8-naphthol-3,6-disulfonsäure und 1 Mol Anilin mit 1 Mol Cyanurchlorid | blaustichig rot |
| 23 | Bis-(4-amino-phenoxy)-methan | sek. Kondensationsprodukt aus 1 Mol 1-Amino-8-naphthol-3,6-disulfonsäure und 1 Mol Anilin mit 1 Mol Cyanurchlorid | rubin |

| Beispiel | Tetrazokomponente | Kupplungskomponente | Farbton |
|---|---|---|---|
| 24 | Bis-(3-amino-phenoxy)-methan | sek. Kondensationsprodukt aus 1 Mol 1-Amino-8-naphthol-3,6-disulfonsäure und 1 Mol Anilin mit 1 Mol Cyanurchlorid | blaustichig rot |
| 25 | Bis-(4-amino-phenoxy)-methan | sek. Kondensationsprodukt aus 1 Mol 1-Amino-8-naphthol-3,6-disulfonsäure und 1 Mol Anilin mit 1 Mol Cyanurchlorid | rubin |
| 26 | Bis-(3-amino-phenoxy)-methan | sek. Kondensationsprodukt aus 1 Mol 1-Amino-8-naphthol-3,6-disulfonsäure und 1 Mol Anilin-4-β-sulfatoäthylsulfon mit 1 Mol Cyanurchlorid | blaustichig rot |
| 27 | Bis-(4-amino-phenoxy)-methan | sek. Kondensationsprodukt aus 1 Mol 1-Amino-8-naphthol-3,6-disulfonsäure und 1 Mol Anilin-4-β-sulfatoäthylsulfon mit 1 Mol Cyanurchlorid | rubin |
| 28 | Bis-(3-nitro-4-amino-phenoxy)-methan | sek. Kondensationsprodukt aus 1 Mol 1-Amino-8-naphthol-3,6-disulfonsäure und 1 Mol Anilin-4-β-sulfatoäthylsulfon mit 1 Mol Cyanurchlorid | rotviolett |
| 29 | Bis-(5-nitro-2-amino-phenoxy)-methan | sek. Kondensationsprodukt aus 1 Mol 1-Amino-8-naphthol-3,6-disulfonsäure und 1 Mol Anilin-4-β-sulfatoäthylsulfon mit 1 Mol Cyanurchlorid | rotviolett |
| 30 | Bis-(2-amino-phenoxy)-methan-dihydrochlorid | sek. Kondensationsprodukt aus 1 Mol 1-Amino-8-naphthol-3,6-disulfonsäure und 1 Mol Anilin-3-β-sulfatoäthylsulfon mit 1 Mol Cyanurchlorid | blaustichig rot |
| 31 | Bis-(3-amino-phenoxy)-methan | sek. Kondensationsprodukt aus 1 Mol 1-Amino-8-naphthol-3,6-disulfonsäure und 1 Mol Anilin-3-β-sulfatoäthylsulfon mit 1 Mol Cyanurchlorid | blaustichig rot |
| 32 | Bis-(4-amino-phenoxy)-methan | sek. Kondensationsprodukt aus 1 Mol 1-Amino-8-naphthol-3,6-disulfonsäure und 1 Mol Anilin-3-β-sulfatoäthylsulfon mit 1 Mol Cyanurchlorid | rubin |
| 33 | Bis-(2-amino-phenoxy)-methan-dihydrochlorid | sek. Kondensationsprodukt aus 1 Mol 1-Amino-8-naphthol-4,6-disulfonsäure und 1 Mol 2-Amino-anisol-4-β-sulfatoäthylsulfon mit 1 Mol Cyanurchlorid | rot |
| 34 | Bis-(3-amino-phenoxy)-methan | sek. Kondensationsprodukt aus 1 Mol 1-Amino-8-naphthol-4,6-disulfonsäure und 1 Mol 2-Amino-anisol-4-β-sulfatoäthylsulfon mit 1 Mol Cyanurchlorid | rot |
| 35 | Bis-(4-amino-phenoxy)-methan | sek. Kondensationsprodukt aus 1 Mol 1-Amino-8-naphthol-4,6-disulfonsäure und 1 Mol 2-Amino-anisol-4-β-sulfatoäthylsulfon mit 1 Mol Cyanurchlorid | rot |
| 36 | Bis-(2-amino-phenoxy)-methan-dihydrochlorid | prim. Kondensationsprodukt aus 1 Mol 1-Amino-8-naphthol-4,6-disulfonsäure mit 1 Mol Cyanurchlorid | rot |
| 37 | Bis-(3-amino-phenoxy)-methan | prim. Kondensationsprodukt aus 1 Mol 1-Amino-8-naphthol-4,6-disulfonsäure mit 1 Mol Cyanurchlorid | rot |
| 38 | Bis-(4-amino-phenoxy)-methan | prim. Kondensationsprodukt aus 1 Mol 1-Amino-8-naphthol-4,6-disulfonsäure mit 1 Mol Cyanurchlorid | rot |
| 39 | Bis-(3-nitro-4-amino-phenoxy)-methan | prim. Kondensationsprodukt aus 1 Mol 1-Amino-8-naphthol-4,6-disulfonsäure mit 1 Mol Cyanurchlorid | rotviolett |
| 40 | Bis-(2-amino-phenoxy)-methan-dihydrochlorid | sek. Kondensationsprodukt aus 1 Mol 1-Amino-8-naphthol-4,6-disulfonsäure und 1 Mol Ammoniak mit 1 Mol Cyanurchlorid | rot |

| Beispiel | Tetrazokomponente | Kupplungskomponente | Farbton |
|---|---|---|---|
| 41 | Bis-(3-amino-phenoxy)-methan | sek. Kondensationsprodukt aus 1 Mol 1-Amino-8-naphthol-4,6-disulfonsäure und 1 Mol Ammoniak mit 1 Mol Cyanurchlorid | rot |
| 42 | Bis-(4-amino-phenoxy)-methan | sek. Kondensationsprodukt aus 1 Mol 1-Amino-8-naphthol-4,6-disulfonsäure und 1 Mol Ammoniak mit 1 Mol Cyanurchlorid | rot |
| 43 | Bis-(3-nitro-4-amino-phenoxy)-methan | sek. Kondensationsprodukt aus 1 Mol 1-Amino-8-naphthol-4,6-disulfonsäure und 1 Mol Ammoniak mit 1 Mol Cyanurchlorid | rotviolett |
| 44 | Bis-(2-amino-phenoxy)-methan-dihydrochlorid | sek. Kondensationsprodukt aus 1 Mol 1-Amino-8-naphthol-4,6-disulfonsäure und 1 Mol 2,5-Dimethoxy-4-β-sulfatoäthyl-sulfonyl-anilin mit 1 Mol Cyanurchlorid | rot |
| 45 | Bis-(3-amino-phenoxy)-methan | sek. Kondensationsprodukt aus 1 Mol 1-Amino-8-naphthol-4,6-disulfonsäure und 1 Mol 2,5-Dimethoxy-4-β-sulfatoäthyl-sulfonyl-anilin mit 1 Mol Cyanurchlorid | rot |
| 46 | Bis-(4-amino-phenoxy)-methan | sek. Kondensationsprodukt aus 1 Mol 1-Amino-8-naphthol-4,6-disulfonsäure und 1 Mol 2,5-Dimethoxy-4-β-sulfatoäthyl-sulfonyl-anilin mit 1 Mol Cyanurchlorid | rot |
| 47 | Bis-(2-amino-phenoxy)-methan-dihydrochlorid | sek. Kondensationsprodukt aus 1 Mol 2-Amino-8-naphthol-3,6-disulfonsäure und 1 Mol 2-Methoxy-5-methyl-4-β-sulfatoäthyl-sulfonyl-anilin mit 1 Mol Cyanurchlorid | rot |
| 48 | Bis-(3-amino-phenoxy)-methan | sek. Kondensationsprodukt aus 1 Mol 2-Amino-8-naphthol-3,6-disulfonsäure und 1 Mol 2-Methoxy-5-methyl-4-β-sulfatoäthyl-sulfonyl-anilin mit 1 Mol Cyanurchlorid | rot |
| 49 | Bis-(4-amino-phenoxy)-methan | sek. Kondensationsprodukt aus 1 Mol 2-Amino-8-naphthol-3,6-disulfonsäure und 1 Mol 2-Methoxy-5-methyl-4-β-sulfatoäthyl-sulfonyl-anilin mit 1 Mol Cyanurchlorid | rot |
| 50 | Bis-(2-amino-phenoxy)-methan-dihydrochlorid | sek. Kondensationsprodukt aus 1 Mol 2-Amino-5-naphthol-1,7-disulfonsäure und 1 Mol 4-β-Thiosulfatoäthyl-sulfonyl-anilin mit 1 Mol Cyanurchlorid | rot |
| 51 | Bis-(3-amino-phenoxy)-methan | sek. Kondensationsprodukt aus 1 Mol 2-Amino-5-naphthol-1,7-disulfonsäure und 1 Mol 4-β-Thiosulfatoäthyl-sulfonyl-anilin mit 1 Mol Cyanurchlorid | rot |
| 52 | Bis-(4-amino-phenoxy)-methan | sek. Kondensationsprodukt aus 1 Mol 2-Amino-5-naphthol-1,7-disulfonsäure und 1 Mol 4-β-Thiosulfatoäthyl-sulfonyl-anilin mit 1 Mol Cyanurchlorid | rot |
| 53 | Bis-(2-amino-phenoxy)-methan-dihydrochlorid | sek. Kondensationsprodukt aus 1 Mol 2-Amino-5-naphthol-7-sulfonsäure und 1 Mol Anilin-2,5-disulfonsäure mit 1 Mol Cyanurhlorid | orange |
| 54 | Bis-(3-amino-phenoxy)-methan | sek. Kondensationsprodukt aus 1 Mol 2-Amino-5-naphthol-7-sulfonsäure und 1 Mol Anilin-2,5-disulfonsäure mit 1 Mol Cyanurchlorid | gelbstichig rot |
| 55 | Bis-(2-amino-phenoxy)-methan-dihydrochlorid | sek. Kondensationsprodukt aus 1 Mol 2-Amino-8-naphthol-6-sulfonsäure und 1 Mol Anilin-2,5-disulfonsäure mit 1 Mol Cyanurchlorid | rot |
| 56 | Bis-(3-amino-phenoxy)-methan | sek. Kondensationsprodukt aus 1 Mol 2-Amino-8-naphthol-6-sulfonsäure und 1 Mol Anilin-2,5-disulfonsäure mit 1 Mol Cyanurchlorid | rot |
| 57 | Bis-(4-amino-phenoxy)-methan | sek. Kondensationsprodukt aus 1 Mol 2-Amino-8-naphthol-6-sulfonsäure und 1 Mol Anilin-2,5-disulfonsäure mit 1 Mol Cyanurchlorid | rot |
| 58 | Bis-(3-nitro-4-amino-phenoxy)-methan | sek. Kondensationsprodukt aus 1 Mol 2-Amino-8-naphthol-6-sulfonsäure und 1 Mol Anilin-2,5-disulfonsäure mit 1 Mol Cyanurchlorid | rubin |

| Beispiel | Tetrazokomponente | Kupplungskomponente | Farbton |
|---|---|---|---|
| 59 | Bis-(5-nitro-2-amino-phenoxy)-methan | sek. Kondensationsprodukt aus 1 Mol 2-Amino-8-naphthol-6-sulfonsäure und 1 Mol Anilin-2,5-disulfonsäure mit 1 Mol Cyanurchlorid | korinth |
| 60 | Bis-(2-amino-phenoxy)-methan-dihydrochlorid | sek. Kondensationsprodukt aus 1 Mol 2-Methyl-amino-8-naphthol-6-sulfonsäure und 1 Mol Anilin-2,5-disulfonsäure mit 1 Mol Cyanurchlorid | orange |
| 61 | Bis-(3-amino-phenoxy)-methan | sek. Kondensationsprodukt aus 1 Mol 2-Methyl-amino-8-naphthol-6-sulfonsäure und 1 Mol Anilin-2,5-disulfonsäure mit 1 Mol Cyanurchlorid | orange |
| 62 | Bis-(4-amino-phenoxy)-methan | sek. Kondensationsprodukt aus 1 Mol 2-Methyl-amino-5-naphthol-7-sulfonsäure und 1 Mol Anilin-2,5-disulfonsäure mit 1 Mol Cyanurchlorid | rot |
| 63 | Bis-(3-amino-phenoxy)-methan | sek. Kondensationsprodukt aus 1 Mol 2-Methyl-amino-5-naphthol-7-sulfonsäure und 1 Mol Anilin-2,5-disulfonsäure mit 1 Mol Cyanurchlorid | rot |
| 64 | Bis-(4-amino-phenoxy)-methan | sek. Kondensationsprodukt aus 1 Mol 1-Amino-8-naphthol-4-sulfonsäure und 1 Mol Methyltaurin mit 1 Mol Cyanurchlorid | rot |
| 65 | Bis-(3-amino-phenoxy)-methan | sek. Kondensationsprodukt aus 1 Mol 1-Amino-8-naphthol-4-sulfonsäure und 1 Mol Methyltaurin mit 1 Mol Cyanurchlorid | rot |
| 66 | Bis-(4-amino-phenoxy)-methan | sek. Kondensationsprodukt aus 1 Mol 1-Amino-5-naphthol-7-sulfonsäure und 1 Mol β-Sulfatoäthylamin mit 1 Mol Cyanurchlorid | rot |
| 67 | Bis-(3-nitro-4-amino-phenoxy)-methan | sek. Kondensationsprodukt aus 1 Mol 1-Amino-5-naphthol-7-sulfonsäure und 1 Mol β-Sulfatoäthylamin mit 1 Mol Cyanurchlorid | korinth |
| 68 | Bis-(2-amino-phenoxy)-methan-dihydrochlorid | sek. Kondensationsprodukt aus 1 Mol 1-Amino-5-naphthol-7-sulfonsäure und 1 Mol β-Sulfatoäthylamin mit 1 Mol Cyanurchlorid | rot |
| 69 | Bis-(2-amino-phenoxy)-methan-dihydrochlorid | 1-(4′-β-Sulfatoäthylsulfonyl-phenyl)-pyrazol-5-on-3-carbonsäure | gelb |
| 70 | Bis-(3-amino-phenoxy)-methan | 1-(4′-β-Sulfatoäthylsulfonyl-phenyl)-pyrazol-5-on-3-carbonsäure | gelb |
| 71 | Bis-(4-amino-phenoxy)-methan | 1-(4′-β-Sulfatoäthylsulfonyl-phenyl)-pyrazol-5-on-3-carbonsäure | gelb |
| 72 | Bis-(3-amino-phenoxy)-methan | 1-(2′-Methoxy-5′-β-sulfato-äthylsulfonyl-phenyl)-pyrazol-5-on-3-carbonsäure | gelb |
| 73 | Bis-(4-amino-phenoxy)-methan | 1-(2′-Methoxy-5′-β-sulfato-äthylsulfonyl-phenyl)-pyrazol-5-on-3-carbonsäure | gelb |
| 74 | Bis-(2-amino-phenoxy)-methan-dihydrochlorid | 1-(2′-Methoxy-5′-β-sulfato-äthylsulfonyl-phenyl)-pyrazol-5-on-3-carbonsäure | gelb |
| 75 | Bis-(2-amino-phenoxy)-methan-dihydrochlorid | sek. Kondensationsprodukt aus 1 Mol 1-(2′-Sulfo-4′-amino-phenyl-pyrazol-5-on-3-carbonsäure und 1 Mol Taurin mit 1 Mol Cyanurchlorid | gelb |
| 76 | Bis-(4-amino-phenoxy)-methan | sek. Kondensationsprodukt aus 1 Mol 1-(2′-Sulfo-4′-amino-phenyl-pyrazol-5-on-3-carbonsäure und 1 Mol Taurin mit 1 Mol Cyanurchlorid | gelb |
| 77 | Bis-(3-amino-phenoxy)-methan | sek. Kondensationsprodukt aus 1 Mol 1-(2′-Sulfo-4′-amino-phenyl-pyrazol-5-on-3-carbonsäure und 1 Mol Taurin mit 1 Mol Cyanurchlorid | gelb |
| 78 | Bis-(3-amino-phenoxy)-methan | sek. Kondensationsprodukt aus 1 Mol 1-(2′-Sulfo-5′-amino-phenyl-pyrazol-5-on-3-carbonsäure und 1 Mol Anilin-3-sulfonsäure mit 1 Mol Cyanurchlorid | gelb |
| 79 | Bis-(4-amino-phenoxy)-methan | sek. Kondensationsprodukt aus 1 Mol 1-(2′- | gelb |

| Beispiel | Tetrazokomponente | Kupplungskomponente | Farbton |
|---|---|---|---|
| | | Sulfo-5'-amino-phenyl-pyrazol-5-on-3-carbonsäure und 1 Mol Anilin-3-sulfonsäure mit 1 Mol Cyanurchlorid | |
| 80 | Bis-(2-amino-phenoxy)-methan-dihydrochlorid | sek. Kondensationsprodukt aus 1 Mol 1-(2'-Sulfo-5'-amino-phenyl-pyrazol-5-on-3-carbonsäure-methylester und 1 Mol Anilin-2,5-disulfonsäure mit 1 Mol Cyanurchlorid | gelb |
| 81 | Bis-(3-amino-phenoxy)-methan | sek. Kondensationsprodukt aus 1 Mol 1-(2'-Sulfo-5'-amino-phenyl-pyrazol-5-on-3-carbonsäure-methylester und 1 Mol Anilin-2,5-disulfonsäure mit 1 Mol Cyanurchlorid | gelb |
| 82 | Bis-(4-amino-phenoxy)-methan | sek. Kondensationsprodukt aus 1 Mol 1-(2'-Sulfo-5'-amino-phenyl-pyrazol-5-on-3-carbonsäure-methylester und 1 Mol Anilin-2,5-disulfonsäure mit 1 Mol Cyanurchlorid | gelb |
| 83 | Bis-(4-amino-phenoxy)-methan | 1-(2'-Methyl-5'-β-sulfatoäthylsulfonylphenyl)-pyrazol-5-on-3-carbonsäure | gelb |
| 84 | Bis-(3-amino-phenoxy)-methan | 1-(2'-Methyl-5'-β-sulfatoäthylsulfonylphenyl)-pyrazol-5-on-3-carbonsäure | gelb |
| 85 | Bis-(3-amino-phenoxy)-methan | prim. Kondensationsprodukt von 1 Mol 1-(2'-Methyl-3'-sulfo-5'-amino-phenyl)-pyrazol-5-on-3-carbonsäure mit 1 Mol Cyanurchlorid | gelb |
| 86 | Bis-(2-amino-phenoxy)-methan-dihydrochlorid | prim. Kondensationsprodukt von 1 Mol 1-(2'-Methyl-3'-sulfo-5'-amino-phenyl)-pyrazol-5-on-3-carbonsäure mit 1 Mol Cyanurchlorid | gelb |
| 87 | Bis-(4-amino-phenoxy)-methan | prim. Kondensationsprodukt von 1 Mol 1-(2'-Methyl-3'-sulfo-5'-amino-phenyl)-pyrazol-5-on-3-carbonsäure mit 1 Mol Cyanurchlorid | gelb |
| 88 | Bis-(2-amino-phenoxy)-methan-dihydrochlorid | sek. Kondensationsprodukt von 1 Mol 1-Amino-4-acetoacetylamino-benzol-2-sulfonsäure und 1 Mol Anilin-3-sulfonsäure mit 1 Mol Cyanurchlorid | gelb |
| 89 | Bis-(4-amino-phenoxy)-methan | sek. Kondensationsprodukt von 1 Mol 1-Amino-4-acetoacetylamino-benzol-2-sulfonsäure und 1 Mol Anilin-3-sulfonsäure mit 1 Mol Cyanurchlorid | gelb |
| 90 | Bis-(4-amino-phenoxy)-methan | prim. Kondensationsprodukt von 1 Mol 1-Amino-4-acetoacetylamino-benzol-2-sulfonsäure mit 1 Mol Cyanurchlorid | gelb |
| 91 | Bis-(2-amino-phenoxy)-methan-dihydrochlorid | prim. Kondensationsprodukt von 1 Mol 1-Amino-4-acetoacetylamino-benzol-2-sulfonsäure mit 1 Mol Cyanurchlorid | gelb |
| 92 | Bis-(3-nitro-4-amino-phenoxy)-methan | prim. Kondensationsprodukt von 1 Mol 1-Amino-4-acetoacetylamino-benzol-2-sulfonsäure mit 1 Mol Cyanurchlorid | gelb |
| 93 | Bis-(2-amino-phenoxy)-methan-dihydrochlorid | sek. Kondensationsprodukt von 1 Mol 1-Amino-3-acetoacetylamino-benzol-4-sulfonsäure und 1 Mol Anilin-2,5-disulfonsäure mit 1 Mol Cyanurchlorid | gelb |
| 94 | Bis-(4-amino-phenoxy)-methan | sek. Kondensationsprodukt von 1 Mol 1-Amino-3-acetoacetylamino-benzol-4-sulfonsäure und 1 Mol Anilin-2,5-disulfonsäure mit 1 Mol Cyanurchlorid | gelb |
| 95 | Bis-(4-amino-phenoxy)-methan | sek. Kondensationsprodukt von 1 Mol 1-Amino-3-acetoacetylamino-benzol-4-sulfonsäure und 1 Mol Anilin-3-sulfonsäure mit 1 Mol Cyanurchlorid | gelb |
| 96 | Bis-(2-amino-phenoxy)-methan-dihydrochlorid | sek. Kondensationsprodukt von 1 Mol 1-Amino-3-acetoacetylamino-benzol-4-sulfonsäure und 1 Mol Anilin-3-sulfonsäure mit 1 Mol Cyanurchlorid | gelb |
| 97 | Bis-(3-nitro-4-amino-phenoxy)-methan | sek. Kondensationsprodukt von 1 Mol 1-Amino-3-acetoacetylamino-benzol-4-sulfonsäure | gelb |

| Beispiel | Tetrazokomponente | Kupplungskomponente | Farbton |
|---|---|---|---|
| | | und 1 Mol Anilin-3-sulfonsäure mit 1 Mol Cyanurchlorid | |
| 98 | Bis-(2-amino-phenoxy)-methan-dihydrochlorid | 2-Acetoacetylamino-8-β-sulfatoäthylsulfonyl-naphthalin-6-sulfonsäure | gelb |
| 99 | Bis-(4-amino-phenoxy)-methan | 2-Acetoacetylamino-8-β-sulfatoäthylsulfonyl-naphthalin-6-sulfonsäure | gelb |
| 100 | Bis-(4-amino-phenoxy)-methan | 2-Acetoacetylamino-8-β-thiosulfatoäthylsulfonyl-naphthalin-6-sulfonsäure | gelb |
| 101 | Bis-(2-amino-phenoxy)-methan-dihydrochlorid | 2-Acetoacetylamino-8-β-thiosulfatoäthylsulfonyl-naphthalin-6-sulfonsäure | gelb |
| 102 | Bis-(2-amino-phenoxy)-methan-dihydrochlorid | sek. Kondensationsprodukt aus 1 Mol 1-Amino-8-naphthol-3,6-disulfonsäure und 1 Mol 2-Amino-anisol-4-β-phosphato-äthylsulfon mit 1 Mol Cyanurchlorid | blaustichig rot |
| 103 | Bis-(3-amino-phenoxy)-methan | sek. Kondensationsprodukt aus 1 Mol 1-Amino-8-naphthol-3,6-disulfonsäure und 1 Mol 2-Amino-anisol-4-β-phosphato-äthylsulfon mit 1 Mol Cyanurchlorid | blaustichig rot |
| 104 | Bis-(4-amino-phenoxy)-methan | sek. Kondensationsprodukt aus 1 Mol 1-Amino-8-naphthol-3,6-disulfonsäure und 1 Mol 2-Amino-anisol-4-β-phosphato-äthylsulfon mit 1 Mol Cyanurchlorid | rubin |
| 105 | Bis-(5-nitro-2-amino-phenoxy)-methan | sek. Kondensationsprodukt aus 1 Mol 1-Amino-8-naphthol-3,6-disulfonsäure und 1 Mol 2-Amino-anisol-4-β-phosphato-äthylsulfon mit 1 Mol Cyanurchlorid | rotviolett |
| 106 | Bis-(3-nitro-4-amino-phenoxy)-methan | sek. Kondensationsprodukt aus 1 Mol 1-Amino-8-naphthol-3,6-disulfonsäure und 1 Mol 2-Amino-anisol-4-β-phosphato-äthylsulfon mit 1 Mol Cyanurchlorid | rotviolett |
| 107 | Bis-(3-nitro-4-amino-phenoxy)-methan | sek. Kondensationsprodukt aus 1 Mol 1-Amino-8-naphthol-3,6-disulfonsäure und 1 Mol 4-β-Sulfatoäthylsulfonylanilin mit 1 Mol Cyanurchlorid | rotviolett |
| 108 | Bis-(5-nitro-2-amino-phenoxy)-methan | sek. Kondensationsprodukt aus 1 Mol 1-Amino-8-naphthol-3,6-disulfonsäure und 1 Mol 4-β-Sulfatoäthylsulfonylanilin mit 1 Mol Cyanurchlorid | rotviolett |
| 109 | Bis-(2-amino-phenoxy)-methan-dihydrochlorid | sek. Kondensationsprodukt aus 1 Mol 1-Amino-8-naphthol-3,6-disulfonsäure und 1 Mol 4-β-Sulfatoäthylsulfonylanilin mit 1 Mol Cyanurchlorid | blaustichig rot |
| 110 | Bis-(3-amino-phenoxy)-methan | sek. Kondensationsprodukt aus 1 Mol 1-Amino-8-naphthol-3,6-disulfonsäure und 1 Mol 4-β-Sulfatoäthylsulfonylanilin mit 1 Mol Cyanurchlorid | blaustichig rot |
| 111 | Bis-(4-amino-phenoxy)-methan | sek. Kondensationsprodukt aus 1 Mol 1-Amino-8-naphthol-3,6-disulfonsäure und 1 Mol 4-β-Sulfatoäthylsulfonylanilin mit 1 Mol Cyanurchlorid | rubin |
| 112 | Bis-(4-amino-phenoxy)-methan | prim. Kondensationsprodukt aus 1 Mol 1-Amino-8-naphthol-3,6-disulfonsäure mit 1 Mol Cyanurchlorid | rubin |
| 113 | Bis-(2-amino-phenoxy)-methan-dihydrochlorid | prim. Kondensationsprodukt aus 1 Mol 1-Amino-8-naphthol-3,6-disulfonsäure mit 1 Mol Cyanurchlorid | blaustichig rot |
| 114 | Bis-(3-amino-phenoxy)-methan | prim. Kondensationsprodukt aus 1 Mol 1-Amino-8-naphthol-3,6-disulfonsäure mit 1 Mol Cyanurchlorid | blaustichig rot |
| 115 | Bis-(5-nitro-2-amino-phenoxy)-methan | prim. Kondensationsprodukt aus 1 Mol 1-Amino-8-naphthol-3,6-disulfonsäure mit 1 Mol Cyanurchlorid | rotviolett |

| Beispiel | Tetrazokomponente | Kupplungskomponente | Farbton |
|---|---|---|---|
| 116 | Bis-(3-nitro-4-amino-phenoxy)-methan | prim. Kondensationsprodukt aus 1 Mol 1-Amino-8-naphthol-3,6-disulfonsäure mit 1 Mol Cyanurchlorid | rotviolett |
| 117 | Bis-(3-nitro-4-amino-phenoxy)-methan | 2-(N-β-Sulfatoäthylsulfonyl-N-methylamino)-5-hydroxynaphthalin-7-sulfonsäure | rot |
| 118 | Bis-(3-amino-phenoxy)-methan | 2-(N-β-Sulfatoäthylsulfonyl-N-methylamino)-5-hydroxynaphthalin-7-sulfonsäure | orange |
| 119 | Bis-(4-amino-phenoxy)-methan | 2-(N-β-Sulfatoäthylsulfonyl-N-methylamino)-5-hydroxynaphthalin-7-sulfonsäure | gelbstichig rot |

**Patentansprüche**

1. Wasserlösliche, faserreaktive Disazofarbstoffe der allgemeinen Formel (1)

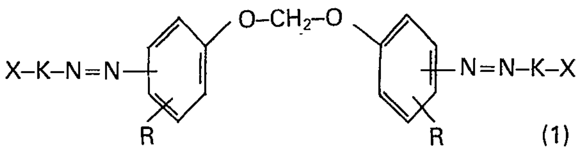

(1)

in welcher R jeweils die gleiche Bedeutung hat und für ein Wasserstoffatom oder eine Nitrogruppe steht, K den Rest einer sulfo- und/oder carboxygruppenhaltigen Kupplungskomponente bedeutet und X eine faserreaktive Gruppe darstellt.

2. Verbindungen nach Anspruch 1, dadurch gekennzeichnet, dass in Formel (1) der Formelrest X-K- bzw. -K-X einen Rest aus der Gruppe der Formeln (4a), (5a), (6a) und (7a)

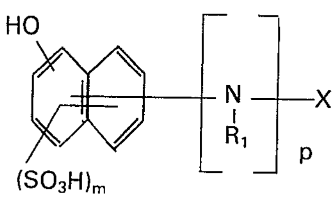

(4)

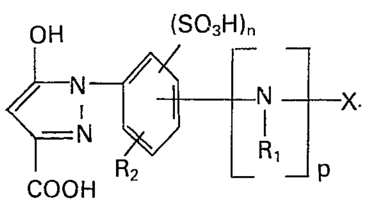

(5)

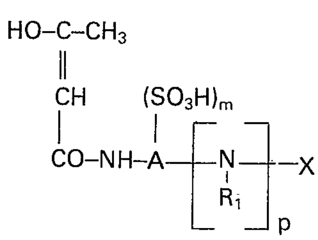

(6)

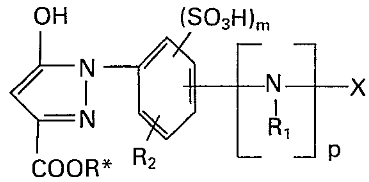

(7)

darstellt, in welchen X die in Anspruch 1 genannte Bedeutung hat, m die Zahl 1 oder 2 und n und p jedes die Zahl Null oder 1 ist, wobei m, n und p gleich oder verschieden voneinander sein können, $R_1$ ein Wasserstoffatom oder eine niedere Alkylgruppe ist, $R_2$ ein Wasserstoffatom, ein Chlor- oder Bromatom, eine niedere Alkylgruppe oder eine niedere Alkoxygruppe ist, A den Benzol- oder Naphthalinkern bedeutet und R* für eine niedere Alkylgruppe steht, wobei $R_1$, $R_2$ und R* gleich oder verschieden voneinander sein können, und wobei in Formel (4a) die freie Bindung im Naphthalinkern zur Azogruppe ortho-ständig zur Hydroxygruppe steht.

Verbindungen nach Anspruch 1 oder 2, dadurch gekennzeichnet, dass X für einen Rest der Formel (8), (9) oder (10)

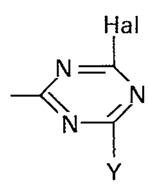

(8)

$$-SO_2-CH=CH_2 \qquad (9)$$

$$-SO_2-CH_2-CH_2-Z \qquad (10)$$

steht, in welcher bedeuten:

- Hal ist ein Fluor-, Chlor- oder Bromatom oder die Sulfonsäuregruppe;
- Y ist ein Chlor- oder Bromatom oder eine Gruppe der allgemeinen Formel -S-R′ oder der allgemeinen Formel -O-R″, in welchen
- R′ niederes Alkyl, substituiertes niederes Alkyl, Phenyl, substituiertes Phenyl oder den Benzthiazolyl(2)-Rest bedeutet
- R″ ein Wasserstoffatom, niederes Alkyl, substituiertes niederes Alkyl, Phenyl oder substituiertes Phenyl bedeutet, oder

Y ist eine Aminogruppe der allgemeinen Formel $-NR_3R_4$, in welcher

$R_3$ ein Wasserstoffatom, ein gegebenenfalls substituierter niederer aliphatischer Rest, ein gegebenenfalls substituierter araliphatischer Rest oder ein cycloaliphatischer Rest ist, und

$R_4$ für ein Wasserstoffatom, einen gegebenenfalls substituierten niederen aliphatischen Rest, für einen gegebenenfalls substituiert aromatischen Rest, für einen gegebenenfalls substituierten araliphatischen Rest, für eine Hydroxygruppe oder eine niedere Alkoxygruppe oder für eine gegebenenfalls substituierte Aminogruppe steht, oder in welcher

$R_3$ und $R_4$ zusammen mit dem Stickstoffatom einen heterocyclischen Ring mit einem Alkylenrest von 2 bis 8 C-Atomen bilden oder einen heterocyclischen Ring bilden, der einen, zwei oder drei niedere Alkylenreste und 1 oder 2 Heteroatome enthält;

Z ist eine unter der Einwirkung eines Alkalis abspaltbare Gruppe.

4. Verbindungen nach Anspruch 3, dadurch gekennzeichnet, dass im Rest der allgemeinen Formel (10) die Gruppe Z ein Chloratom, die Sulfato-, Thiosulfato-, Phosphato-, Acetyloxy-, Dimethylamino- oder Diäthylaminogruppe ist.

5. Verbindungen nach Anspruch 3, dadurch gekennzeichnet, dass im Rest der allgemeinen Formel (8) Hal ein Fluor- oder ein Chloratom ist und Y eine der in Anspruch 3 genannten Bedeutungen hat.

6. Verbindungen nach Anspruch 3, dadurch gekennzeichnet, dass der Rest der allgemeinen Formel (8) ein Rest der allgemeinen Formel (11)

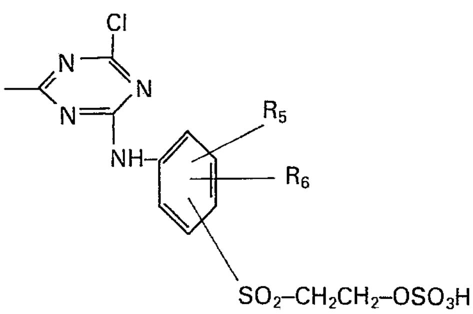

(11)

ist, worin $R_5$ ein Wasserstoffatom, ein Chlor- oder Bromatom oder eine Methyl-, Methoxy-, Carboxy- oder Sulfogruppe darstellt und $R_6$ ein Wasserstoffatom oder ein Chloratom oder eine Methyl- oder Methoxygruppe bedeutet.

7. Verfahren zur Herstellung der Farbstoffe der allgemeinen Formel (1) nach Anspruch 1, dadurch gekennzeichnet, dass man eine aromatische Diamino-Verbindung der allgemeinen Formel (2)

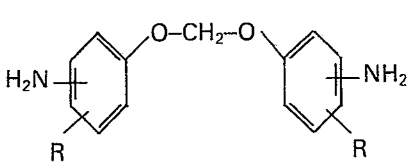

(2)

in welcher R die in Anspruch 1 genannte Bedeutung hat, tetrazotiert und mit der äquivalenten Menge einer Kupplungskomponente der allgemeinen Formel (3)

$$H–K–X \quad (3)$$

mit K und X der in Anspruch 1 genannten Bedeutung kuppelt.

8. Verwendung der Farbstoffe nach Anspruch 1 zum Färben und Bedrucken von hydroxygruppenhaltigem oder carbonamidgruppenhaltigem Fasermaterial.

**Claims**

1. Water-soluble, fibre-reactive disazo dyestuffs of the general formula (1)

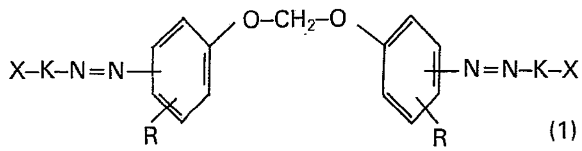

(1)

in which R each has the same meaning and denotes a hydrogen atom or a nitro group, K is the radical of a coupling component containing sulfo and/or carboxy groups, and X represents a fibre-reactive group.

2. Compounds according to claim 1, characterized in that the formula radical X-K- and -K-X in formula (1) represents a radical from the group of the formulae (4a), (5a), (6a) and (7a)

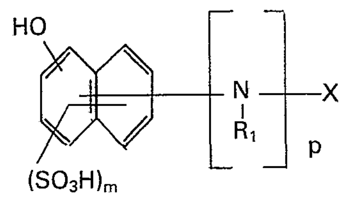

(4)

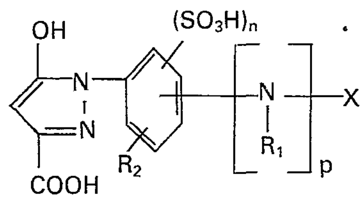

(5)

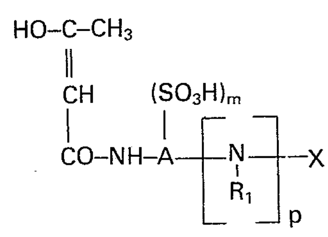

(6)

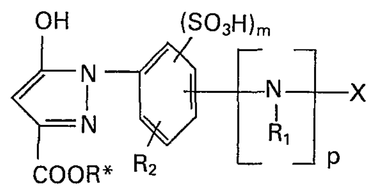

(7)

in which

X has the meaning mentioned in claim 1,

m is the number 1 or 2, and

n and p each is the number zero or 1, and

m, n and p can have the same or a different meaning from one another,

$R_1$ is a hydrogen atom or a lower alkyl group,

$R_2$ is a hydrogen atom, a chlorine or bromine atom, a lower alkyl group or a lower alkoxy group,

A denotes the benzene or naphthalene nucleus, and

R* denotes a lower alkyl group, and

$R_1$, $R_2$ and R* can have the same or a different meaning from one another, and

the free bond to the azo group in the naphthalene nucleus in formula (4a) is in the ortho-position relative to the hydroxy group.

3. Compounds according to claim 1 or 2, characterized in that X denotes a radical of the formula (8), (9) or (10)

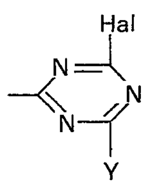

(8)

$-SO_2-CH=CH_2$ (9)

$-SO_2-CH_2-CH_2-Z$ (10)

in which

Hal is a fluorine, chlorine or bromine atom or the sulfonic acid group;

Y is a chlorine or bromine atom or a group of the general formula -S-R' or of the general formula -O-R", in which

R' denotes lower alkyl, substituted lower alkyl, phenyl, substituted phenyl or the benzthiazolyl(2)-radical,

R" denotes a hydrogen atom, lower alkyl, substituted lower alkyl, phenyl or substituted phenyl, or

Y is an amino group of the general formula $-NR_3R_4$ in which

$R_3$ denotes a hydrogen atom, an optionally substituted lower aliphatic radical, an optionally substituted araliphatic radical or a cycloaliphatic radical, and

$R_4$ denotes a hydrogen atom, an optionally substituted lower aliphatic radical, an optionally substituted aromatic radical, an optionally substituted araliphatic radical, a hydroxy group or a lower alkoxy group or an optionally substituted amino group, or in which

$R_3$ and $R_4$ form, together, with the nitrogen atom, a heterocyclic ring having an alkylene radical of 2 to 8 C atoms, or a heterocyclic ring which contains one, two or three lower alkylene radicals and one or two hetero atoms;

Z denotes a group which can be splitt off under the action of an alkali.

4. Compounds according to claim 3, characterized in that the goup Z present in the radical of the general formula (10), denotes a chlorine atom, the sulfato-, thiosulfato-, phosphato-, acetyloxy-, dimethylamino- or diethylamino group.

5. Compounds according to claim 3, characterized in that, in the radical of the general formula (8), Hal denotes a fluorine or a chlorine atom and Y has the meaning mentioned in claim 3.

6. Compounds according to claim 3, characterized in that the radical of the general formula (8) represents a radical of the general formula (11)

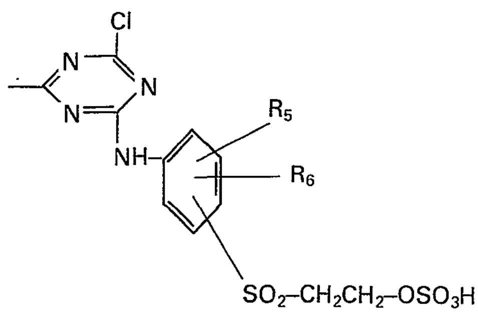

(11)

in which $R_5$ denotes a hydrogen atom, a chlorine or bromine atom or a methyl, methoxy, carboxy or sulfo group and $R_6$ denotes a hydrogen atom or a chlorine atom or a methyl or methoxy group.

7. Process for the preparation of the dyestuffs of the general formula (1) of claim 1, characterized by that an aromatic diamino compound of the general formula (2)

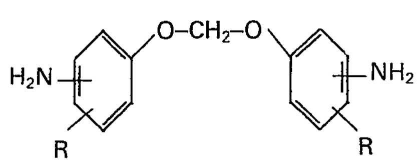

(2)

in which R has the meaning mentioned in claim 1, is tetrazotized and coupled with the equivalent amount of a coupling component of the general formula (3)

H–K–X (3)

in which K and X have the meanings mentioned in claim 1.

8. Use of the dyestuffs of claim 1 for dyeing and printing of fibre material containing hydroxy groups or carbonamide groups.

**Revendications**

1. Colorants bis-azoïques réactifs à l'égard des fibres et solubles dans l'eau, qui répondent à la formule générale 1

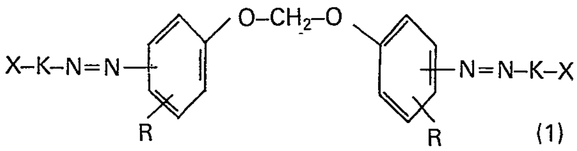

(1)

dans laquelle les R ont, pour un même composé, la même signification et représentent chacun un atome d'hydrogène ou un groupe nitro, K représente un radical d'un copulant porteur d'un groupe sulfo et/ou d'un groupe carboxy, et X représente un radical capable de réagir avec les fibres.

2. Composés selon la revendication 1, caractérisés en ce que, dans la formule 1, le radical X-K- ou -K-X est pris dans l'ensemble constitué par les radicaux répondant aux formules 4a, 5a, 6a et 7a:

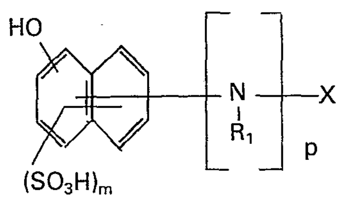

(4)

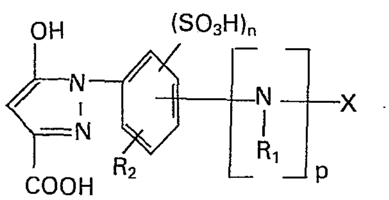

(5)

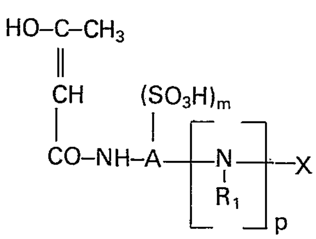

(6)

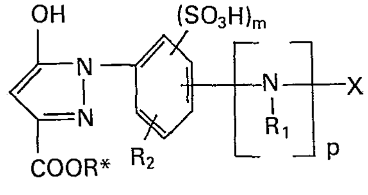

(7)

dans lesquelles X a la signification donnée à la revendication 1, m représente le nombre 1 ou le nombre 2, n et p représentent chacun le nombre 0 ou le nombre 1, m, n et p pouvant être identiques ou différents les uns des autres, $R_1$ représente un atome d'hydrogène ou un radical alkyle inférieur, $R_2$ représente un atome d'hydrogène, de chlore ou de brome, un radical alkyle inférieur ou un radical alcoxy inférieur, A représente le noyau benzénique ou naphtalénique et R* représente un radical alkyle inférieur, $R_1$, $R_2$ et R* pouvant être identiques ou différents les uns des autres, et la liaison libre partant du noyau naphtalénique, dans la formule 4a, pour rejoindre le groupe azoïque étant en position ortho par rapport au groupe hydroxy.

3. Composés selon l'une des revendications 1 et 2, caractérisés en ce que X représente un radical répondant à l'une des formules 8, 9 et 10:

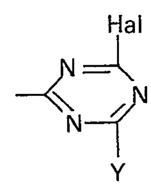

(8)

$-SO_2-CH=CH_2$ (9)

$-SO_2-CH_2-CH_2-Z$ (10)

dans lesquelles

Hal représente un atome de fluor, de chlore ou de brome ou un groupe sulfo,

Y représente un atome de chlore ou de brome ou un radical de formule générale -S-R' ou de formule générale -O-R'' dans lesquelles:

R' représente un radical alkyle inférieur, un radical alkyle inférieur substitué, un radical phényle, un radical phényle substitué ou le radical benzothiazolyle-2,

R'' représente un atome d'hydrogène, un radical alkyle inférieure, un radical alkyle inférieur substitué, un radical phényle ou un radical phényle substitué, ou

Y représente un groupe amino de formule générale $-NR_3R_4$ dans lequel

$R_3$ représente un atome d'hydrogène, un radical aliphatique inférieur éventuellement substitué, un radical araliphatique éventuellement substitué ou un radical cycloaliphatique et

$R_4$ représente un atome d'hydrogène, un radical aliphatique inférieur éventuellement substitué, un radical aromatique éventuellement substitué, un radical araliphatique éventuellement substitué, un group hydroxy, un radical alcoxy inférieur ou un groupe amino éventuellement substitué,

$R_3$ et $R_4$ forment ensemble et avec l'atome d'azote un noyau hétérocyclique contenant un radical alkylène en $C_2-C_8$, ou un noyau heterocyclique contenant un, deux ou trois radicaux alkylènes inférieurs et un ou deux hétéroatomes, et

représente un radical éliminable sous l'action d'un composé alcalin.

4. Composés selon la revendication 3, caractérisés en ce que, dans le radical de formule générale 10, le radical Z est un atome de chlore ou un radical sulfato, thiosulfato, posphato, acétyloxy, diméthylamino ou diethylamino.

5. Composés selon la revendication 3, caractérisés en ce que, dans le radical de formule générale 8, Hal représente un atome de fluor ou de chlore et Y a l'une des significations indiquées à la revendication 3.

6. Composés selon la revendication 3 caractérisés en ce que le radical de formule générale 8 est un radical répondant à la formule générale 11

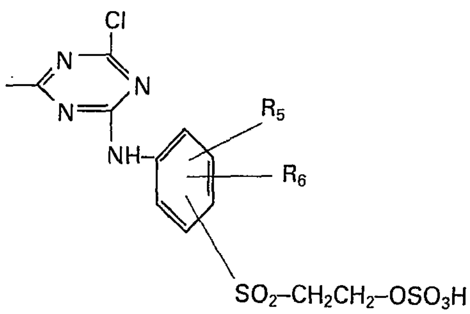

(11)

dans laquelle $R_5$ représente un atome d'hydrogène, de chlore ou de brome ou un radical méthyle, méthoxy, carboxy ou sulfo et $R_6$ représente un atome d'hydrogène ou de chlore ou un radical méthyle ou méthoxy.

7. Procédé de préparation des colorants de formule générale 1 selon la revendication 1, procédé caractérisé en ce qu'on tétrazote une diamine aromatique répondant, à la formule générale 2

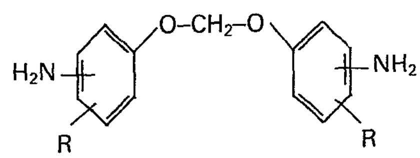

(2)

dans laquelle R a la signification donnée à la revendication 1, et on copule le tétrazoïque avec la quantité équivalente d'une copulant répondant à la formule générale 3

$$H\text{–}K\text{–}X \qquad (3)$$

dans laquelle K et X ont les significations données à la revendication 1.

8. Application des colorants selon la revendication 1 à la teinture et à l'impression de matières fibreuses contenant des groupes hydroxy ou des groupes carboxamido.